(19) Europäisches Patentamt
European Patent Office
Office européen des brevets

(11) **EP 3 370 511 B1**

(12) **EUROPÄISCHE PATENTSCHRIFT**

(45) Veröffentlichungstag und Bekanntmachung des Hinweises auf die Patenterteilung:
**15.01.2020 Patentblatt 2020/03**

(21) Anmeldenummer: **16801704.4**

(22) Anmeldetag: **27.10.2016**

(51) Int Cl.:
*A01J 11/02* $^{(2006.01)}$      *A01J 11/04* $^{(2006.01)}$
*B01D 19/02* $^{(2006.01)}$

(86) Internationale Anmeldenummer:
**PCT/EP2016/001790**

(87) Internationale Veröffentlichungsnummer:
**WO 2017/076491 (11.05.2017 Gazette 2017/19)**

(54) **VERFAHREN UND VORRICHTUNG ZUR STEUERUNG DER SCHAUMBILDUNG IN BEHÄLTERN FÜR FLÜSSIGKEITEN ODER SCHÄUME UND REGISTERSYSTEM FÜR EINE SOLCHE VORRICHTUNG**

METHOD AND DEVICE FOR CONTROLLING FOAMING IN CONTAINERS FOR LIQUIDS OR FOAMS AND REGISTER SYSTEM FOR SUCH A DEVICE

PROCÉDÉ ET DISPOSITIF DE RÉGULATION DE LA FORMATION DE MOUSSE DANS DES RÉCIPIENTS POUR LIQUIDES OU POUR MOUSSES ET SYSTÈME DE BATTERIES POUR UN TEL DISPOSITIF

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **03.11.2015 DE 102015014107**
**20.11.2015 DE 102015015055**

(43) Veröffentlichungstag der Anmeldung:
**12.09.2018 Patentblatt 2018/37**

(73) Patentinhaber: **GEA TDS GmbH**
**31157 Sarstedt (DE)**

(72) Erfinder:
• **ASSING, Hubert**
**48683 Ahaus (DE)**
• **BUSS, Helmut**
**46359 Heiden (DE)**

• **ROLLE, Ulrich**
**48351 Everswinkel (DE)**
• **SCHMIED, Andreas**
**48249 Dülmen (DE)**
• **SCHWENZOW, Uwe**
**48683 Ahaus (DE)**
• **TACKE, Ludger**
**46342 Velen (DE)**
• **ZIMMERMANN, Dietrich**
**96103 Hallstadt (DE)**

(74) Vertreter: **Hauck Patentanwaltspartnerschaft mbB**
**Postfach 11 31 53**
**20431 Hamburg (DE)**

(56) Entgegenhaltungen:
**WO-A1-2005/036954      DE-A1- 2 163 666**
**GB-A- 726 804      US-A- 1 250 094**
**US-A- 2 604 154      US-A- 4 139 350**

**EP 3 370 511 B1**

**Beschreibung**

TECHNISCHES GEBIET

Die Erfindung betrifft ein Verfahren und eine Vorrichtung zur Steuerung der Schaumbildung in einem Flüssigkeits-Behälter oder in einem Schaum-Behälter sowie ein Registersystem für eine solche jeweilige Vorrichtung. Bei den Flüssigkeiten handelt es sich vorzugsweise um flüssige Nahrungsmittel wie beispielsweise Milch, teilentrahmte Milch oder Fruchtsäfte, aber generell werden alle schäumenden Flüssigkeiten in Betracht gezogen.

STAND DER TECHNIK

Bei Flüssigkeiten der in Rede stehenden Art sind Gasbeimengungen, insbesondere Luftbeimengungen mit ihrem Anteil an Luftsauerstoff, in vielfacher Hinsicht schädlich, und sie führen bei der Behandlung und Verarbeitung dieser Flüssigkeiten sehr oft zu einer unerwünschten Schaumbildung. Aus diesem Grunde sind in Prozessanlagen, die die vorgenannten gasbeladenen flüssigen Nahrungsmittel oder andere Flüssigkeiten behandeln und verarbeiten, Entgasungsvorrichtungen zur Abscheidung von Gasbeimengungen angeordnet. Bei diesen Prozessanlagen kann es sich beispielsweise um Pasteurisierungs-, UHT-Anlagen oder um Eindampfer handeln. Entgasungsvorrichtungen der vorstehenden Art sind beispielsweise in der EP 1 866 046 B1 oder der DE 297 22 673 U1 beschrieben. Im Regelfall wird die Entgasung in den bekannten Entgasungsvorrichtungen dadurch forciert, dass die Flüssigkeit einem Unterdruck ausgesetzt ist, der durch eine an den Kopfraum des Entgasungsbehälters angeschlossene Unterdruckquelle, beispielsweise eine Flüssigkeitsringpumpe, erzeugt wird.

Auch auf anderen Gebieten der Nahrungsmittel- und Getränkeindustrie, beispielsweise bei der Milchübernahme in Milchsammelwagen, treten oft erhebliche Schaumprobleme in einem in der Messanordnung angeordneten Luftabscheider auf, sodass sogar Schaumsammelbehälter vorgesehen werden müssen, um einerseits das Austreten von Schaum in die Umgebung zu verhindern und um andererseits die im Schaum enthaltene Flüssigkeit der Mengenerfassung wieder zuzuführen (DE 38 03 572 A1).

Bei der Entgasung in den Behältern der bekannten Entgasungsvorrichtungen oder auch in Behältern, in denen schäumende Flüssigkeiten behandelt und verarbeitet werden, generiert die Flüssigkeit an einer freien Oberfläche einer Flüssigkeitsvorlage oder auch auf einer freien Oberfläche eines Flüssigkeitsfilms, über den die Flüssigkeit in die Flüssigkeitsvorlage eingebracht wird, Schaum, der, ausgehend von den freien Oberflächen in Richtung eines Kopfraumes des Behälters, aufwächst. Die Schaumbildung kann dabei so intensiv sein, dass sich der gesamte Kopfraum des Entgasungsbehälters mit Schaum füllt und der Schaum dadurch den Entgasungsvorgang zum Stillstand bringt oder wenigstens deutlich hemmt, sodass insgesamt die Prozessführung stark erschwert wird. Gelangt der Schaum dabei in eine ggf. vorhandene Unterdruckquelle, dann muss der Entgasungsprozess ohnehin gestoppt werden. Es besteht demnach das Bedürfnis, die Schaumbildung in den Behältern zur Behandlung und Verarbeitung der Flüssigkeiten selbst, wo die Schaumbildung originär stattfindet, zu steuern. Falls unerwünschter Schaum in einem Schaumsammelbehälter Aufnahme finden muss, besteht darüber hinaus die Notwendigkeit, die Schaumbildung zusätzlich auch hier oder anstelle ihrer originären Entstehung zu steuern bzw. den Schaum abschließend zu destabilisieren und in Flüssigkeit umzuwandeln.

Es ist bekannt, Schaum auf chemische, mechanische und thermische Weise zu bekämpfen. Eine Bekämpfung durch Zugabe chemischer Mittel scheidet bei flüssigen Nahrungsmittelprodukten in der Regel aus, um Verunreinigung zu vermeiden. Mechanische Schaumzerstörer liefern bei hohen Schaumbildungsraten unbefriedigende Ergebnisse aufgrund zu geringer Leistungsfähigkeit und eines relativ großen und teilweise auch komplizierten Konstruktionsaufwandes, der bezüglich der Herstellung bzw. der Anpassung an die verschiedensten Anwendungserfordernisse getrieben werden muss.

Die Zerstörung unerwünschter Schaumblasen geht aus von der Erkenntnis, dass die Schaumblase zerfällt, wenn deren Volumen nicht mehr stabil ist. Das Volumen einer Schaumblase bestimmt sich aus dem Gleichgewicht zwischen dem Druck des eingesperrten Gases einerseits und der Summe zweier Drücke andererseits, nämlich dem Druck, unter dem der Behandlungsprozess der Flüssigkeit stattfindet, und dem Druck, der durch die Oberflächenspannung der Schaumblase entsteht.

Ziel einer Schaumzerstörung auf thermische Weise, nämlich entweder durch Erwärmung oder durch Abkühlung, muss es daher sein, den vorgenannten Gleichgewichtszustand signifikant zu stören. Eine Erwärmung der Schaumblasen bewirkt eine Erhöhung und eine Abkühlung führt zu einer Erniedrigung des jeweiligen Innendruckes der Schaumblasen. Hierzu offenbart das Dokument DE 21 63 666 A1 als zielführend, den Gleichgewichtszustand zwischen Oberflächenspannung und Innendruck aller oder eines Teiles der zu zerstörenden Schaumblasen durch Änderung des Innendruckes der Schaumblasen zu stören. Diesbezüglich wird vorgeschlagen, den Innendruck durch Aufheizen aller oder eines Teiles der Schaumblasen zu erhöhen, und zwar beispielsweise durch Aufheizen der Schaumblasen auf elektrischen Wege durch Einbau eines elektrisch leitenden Widerstandsdrahtes in die Schaumzone.

Ein weiterer Vorschlag sieht vor, die Schaumblasen durch Einblasen heißer Heizgase in die Schaumzone aufzuheizen. Bei dem ersten Vorschlag sind die Betriebssicherheit und die Temperaturführung problematisch und bei dem zweiten Vorschlag sind aufgrund möglicher Verunreinigungen die notwendige Produkt- und Qualitätssicherheit nicht mehr gegeben. Ein anderer Vorschlag, der zumindest bei geeigneter Ausgestaltung seiner Lösungsmittel die sanitären und hygienischen Erfordernisse erfüllt, die für die im Rahmen der Erfindung zu behandelnden flüssigen Nahrungsmittelprodukte gelten, sieht vor, dass die Schaumblasen mit einem mit wärmeren gasförmigen oder flüssigen Medien beschickten und in der Schaumzone angebrachten Wärmeaustauscher aufgeheizt werden.

Hinter dem letztgenannten Vorschlag bleibt die Offenbarung des Dokumentes DE 37 27 132 A1 zurück, da hier bei einem Verfahren zur Destabilisierung und Zerstörung von Schäumen vorgeschlagen wird, die mechanische Festigkeit des Schaumes in einer an sich bekannten Weise durch Einbringung von thermischer Energie stark herabzusetzen, aber die diesbezügliche Einbringung im Rahmen des hier in Rede stehenden Problems in einer problematischen Zufuhr von Dampf oder erhitztem Gas besteht. Darüber hinaus wird die problematische Zufuhr dieser Stoffe mit Mitteln zur mechanischen Schaumzerstörung oder mit Mitteln zur Ultraschallerzeugung kombiniert, die einen zusätzlichen konstruktiven und kostenträchtigen Aufwand erfordern.

In der DE 43 04 808 A1 sind ein Verfahren und eine Vorrichtung zum Abfüllen von Milch in Behälter beschrieben. Als Behälter werden Flaschen verwendet, wobei die Aufgabe gelöst wird, den bei der Abfüllung von Milch in die Behälter entstandenen Schaum noch während des Abfüllprozesses zu beseitigen und gleichzeitig eine genaue Füllmenge im Behälter zu gewährleisten. Die Lösung dieser Aufgabe besteht unter anderem darin, die Flasche im Unterdruckbereich mit Milch zu überfüllen und dass sodann die überfüllte Milch durch Unterdruck bis zum vorgegebenen Füllniveau mit allem sich gebildeten Schaum abgesaugt und in einem gesonderten Behältnis gesammelt wird. Der zuständige Fachmann entnimmt dem Dokument die Hinweise, dass es nicht möglich oder zumindest problematisch ist, den Schaum (insbesondere Milchschaum) durch Erwärmung von Einrichtungen, die in den Schaum hineinragen, zu zerstören. Stattdessen wird vorgeschlagen, den sich bildenden Schaum abzusaugen und in einem gesonderten Behältnis zu sammeln.

Die DE 1 017 140 A1 offenbart eine Vorrichtung zur Schaumzerstörung in Flüssigkeitsverdampfern, in denen das Eindampfen der Flüssigkeit insbesondere auch unter Vakuum erfolgt. Hier dient das Vakuum der Absenkung der Verdampfungstemperatur und nicht etwa dem Absaugen des Schaumes. Zur Aussteifung des vakuumfesten Verdampfermantels ist es bekannt, einen Versteifungsring vorzusehen. Der Anmeldungsgegenstand nutzt die bekannte Erkenntnis, dass Schaumblasen an gekühlten Wänden zusammenfallen, und löst die objektive Aufgabe, den Dampfabscheidermantel mit einer reinigungsfreundlichen Versteifung auszugestalten und gleichzeitig diese Versteifung zur Schaumzerstörung zu nutzen. Die Lösung dieser Aufgabe besteht darin, etwa in der Mitte des abgestuften Verdampfermantels einen eingeschweißten Ring vorzusehen, der zur Versteifung des Mantels und zum Hindurchleiten eines Kühlmittels dient. Der zuständige Fachmann entnimmt dem Dokument den Hinweis, dass es bekannt ist, das Gleichgewicht der Schaumblasen durch Abkühlung zu stören und dadurch eine Zerstörung des Schaumes herbeizuführen. Darüber offenbart dieser Stand der Technik, den Behältermantel im Bereich der Schaumbildung von außen nach innen im Durchmesser abzustufen, wobei die Abstufung durch einen Rohrring gebildet wird. Dabei wirkt die durch den Rohrring gebildete Kühlzone nur tangential von außen auf den über den gesamten Verdampferquerschnitt aufwachsenden Schaum ein.

Die DE 10 2004 062 804 B3 beschreibt eine Vorrichtung zum Temperieren von Gegenständen und/oder Medien. Diese Temperierung, eine Erwärmung oder Kühlung, erfolgt mit mindestens einem sog. Thermoelementblock. Dieser Thermoelementblock stellt ein flächiges Gebilde dar, das aus mehreren Peltierelementen besteht, die abwechselnd elektrisch in Reihe, thermisch parallel geschaltet und nach außen mit einer elektrisch isolierenden und thermisch leitenden Schicht abgedeckt sind. Das zu erwärmende oder zu kühlende Medium wird dabei in mindestens einer trichterförmigen Vertiefung aufgenommen, die an ihrer tiefsten Stelle eine Zuflussöffnung und am oberen Rand einen umlaufenden Abflusskanal, der über eine Überlaufkante beschickt wird, aufweist. Die Vertiefung wird von der Zuflussöffnung zum Abflusskanal hin von dem Medium durchströmt. Der Abflusskanal wird außenseits von einer Dichtung umschlossen, über die der Innenraum der Vertiefung mit dem Thermoelementblock abgedichtet verschlossen ist. Zwischen dem die Vertiefung durchströmenden Medium und dem quasi als Deckel der Vertiefung fungierenden flächigen Thermoelementblock findet ein direkter Wärmeaustausch statt (Erwärmung oder Kühlung). Dieser Stand der Technik offenbart keine Anwendung, die auf eine Zerstörung von sich aus einer Flüssigkeit bildendem Schaum hinweist oder eine diesbezügliche Anwendung nahelegt. Weiterhin ist der das jeweilige Medium erwärmende oder kühlende flächige Thermoelementblock weder außenseits umströmbar noch innenseits durchströmbar.

Die GB 726 804 A beschreibt eine Entgasungsvorrichtung für Flüssigkeiten, wobei nahe dem oberen Teil des geschlossenen Gefäßes und oberhalb des Flüssigkeitsspiegels sich ein System eng beabstandeter, gerader, paralleler Rohre befindet, durch die im Betrieb ein Kühlmedium fließt. Sobald der Schaum mit den Rohren in Kontakt kommt, wird er abgekühlt, so dass der Schaum gebrochen wird und der in den Schaumblasen enthaltene Dampf kondensiert.

Es ist Aufgabe der vorliegenden Erfindung, ein Verfahren und eine Vorrichtung zur Steuerung der Schaumbildung in einem Behälter für Flüssigkeiten oder für Schäume anzugeben, die die Schaumbildung wirksam steuern und begrenzen und dabei das Aufwachsen des Schaumes über ein tolerierbares Maß hinaus unter Sicherstellung der sanitären und hygienischen Erfordernisse der Prozessführung verhindern.

ZUSAMMENFASSUNG DER ERFINDUNG

Diese Aufgabe wird durch ein Verfahren mit den Merkmalen der unabhängigen Nebenansprüche 1 und 2 gelöst. Vorteilhafte Ausgestaltungen des jeweiligen Verfahrens sind Gegenstand der Unteransprüche. Ein Flüssigkeits-Behälter für Flüssigkeiten und ein Schaum-Behälter für Schäume mit jeweils einer Vorrichtung zur Steuerung der Schaumbildung in dem Flüssigkeits- bzw. dem Schaum-Behälter, geeignet zur Durchführung des zugeordneten erfindungsgemäßen Verfahrens, ist Gegenstand der unabhängigen Nebenansprüche 9 und 10. Ein Registersystem für die Vorrichtung zur Steuerung der Schaumbildung des Flüssigkeits- oder Schaum-Behälters ist Gegenstand des Anspruchs 13 und des Anspruchs 14. Vorteilhafte Ausgestaltungen des Registersystems sind in den zugeordneten Unteransprüchen beansprucht. Das erfindungsgemäße Verfahren geht aus von einem Flüssigkeits-Behälter, dem Flüssigkeit zugeführt wird, die dort behandelt wird und verweilt und als behandelte Flüssigkeit unterhalb einer von der Flüssigkeit in dem Flüssigkeits-Behälter gebildeten freien Oberfläche aus dem Flüssigkeits-Behälter abgeführt wird. Das Verfahren in seiner generellen Wirkungsweise behandelt einen Schaum, der an der freien Oberfläche der Flüssigkeit und aus dieser heraus mit einer Flüssigkeits-Temperatur generiert wird und der, ausgehend von dieser freien Oberfläche, in den Raum darüber aufwächst. Der Schaum besitzt dabei die Temperatur der Flüssigkeit, ggf. mit einer geringfügig geringeren Temperatur. Bei dieser freien Oberfläche kann es sich um eine freie Oberfläche der Flüssigkeitsvorlage im Flüssigkeits-Behälter handeln, einem in der Regel in seiner Höhe gesteuerten Niveau dieser Flüssigkeitsvorlage, und/oder um die freie Oberfläche eines Flüssigkeitsfilms, über den die Flüssigkeit in die Flüssigkeitsvorlage eingebracht wird. Unter dem Begriff "Aufwachsen" bzw. einer "Aufwachsrichtung" soll nachfolgend die stattfindende Bewegungsrichtung des Schaumes verstanden werden, wobei diese auch abweichend von der Schwerkraftrichtung verlaufen kann.

Es handelt sich somit bei diesem Aufwachsen des Schaums um einen dynamischen Prozess der Schaumausbreitung. An der Grenzfläche der Schaumausbreitung setzt der erfinderische Grundgedanke an. Der mit der Flüssigkeits-Temperatur aufwachsende Schaum erfährt, beginnend in einem Heizabstand von der freien Oberfläche, zunächst eine Erwärmung von der Flüssigkeits-Temperatur auf eine Erwärmungs-Temperatur in einem aus einem Heiz- und einem Kühlregister bestehenden Registersystem. Dieser Heizabstand muss von dem aufwachsenden Schaum zunächst durchmessen werden, bevor die Erwärmung einsetzt. Der Heizabstand kann, in Abhängigkeit von der Flüssigkeit, fest vorgegeben oder auch im Entgasungsbehälter einstellbar sein. Dabei ist der Bereich, in dem die Erwärmung stattfindet, gemessen in Aufwachsrichtung, begrenzt und vorgegeben. Die Schaumblasen werden sich durch die lokale Erwärmung, vornehmlich begrenzt in diesem Bereich, durch die thermodynamischen Gesetzmäßigkeiten zwangsläufig ausdehnen, der vorstehend thematisierte Gleichgewichtszustand wird gestört und die Schaumblasen werden instabil. Die Grenzfläche der Schaumausbreitung wird sich durch die Erwärmung forciert fortbewegen.

Der weiter aufwachsende erwärmte Schaum erfährt anschließend, beginnend in einem Kühlabstand vom Heizabstand, in dem Registersystem eine Abkühlung auf eine Abkühlungs-Temperatur, die die Flüssigkeits-Temperatur unterschreiten kann. Der Kühlabstand kann auch auf die schaumgenerierende Oberfläche bezogen werden, wobei der Kühlabstand dann größer als der Heizabstand ist. Dabei ist der Bereich, in dem die Abkühlung stattfindet, gemessen in Aufwachsrichtung, ebenfalls begrenzt und vorgegeben. Durch die plötzliche Abkühlung der die Schaumblasen umhüllenden Flüssigkeitslamellen wird der Gleichgewichtszustand der Schaumblasen wiederum gestört, und zwar gegensätzlich zur Erwärmung. Die Schaumblasen werden durch die sich ändernde Viskosität der Flüssigkeitslamellen noch instabiler und zerplatzen, wodurch der Schaum in diesem Bereich in sich zusammenfällt und sich auf ein zugeordnetes Flüssigkeitsvolumen reduziert, das in Richtung der Schwerkraft abfließt. Damit ist die Schaumausbreitung, in Aufwachsrichtung gesehen, am Ende der Abkühlung bzw. Abkühlungszone oder in einem tolerierbaren Abstand von diesem Ende beendet.

Die Mittel zur Durchführung des Wärmeaustauschs zur Erwärmung und Abkühlung des Schaumes, nämlich das aus einem Heiz- und einem Kühlregister bestehende Registersystem, sind in einer Aufwachsrichtung des Schaumes strömungsdurchlässig ausgebildet.

Die Erwärmungs- und/oder die Abkühlungs-Temperatur werden/wird in Abhängigkeit von den Eigenschaften der Flüssigkeit und/oder den physikalischen Randbedingungen eingestellt. Unter den Eigenschaften der Flüssigkeit wird der Volumenstrom, die Viskosität, der Druck, die Temperatur und/oder die Zusammensetzung der Flüssigkeit im Bereich der Zuführung in den oder im Bereich der Abführung aus dem Flüssigkeits-Behälter und unter den physikalischen Randbedingungen werden/wird der Druck und/oder das Ergebnis der Schaumzerstörung in dem Flüssigkeits-Behälter verstanden. Das Ergebnis der Schaumzerstörung zeigt sich darin, ob oberhalb der Abkühlung des Schaumes noch Schaum vorliegt und ggf. weiter aufwächst. Ein aus diesem Schaum generiertes Signal kann dann zur Einstellung der Erwärmungs- und/oder Abkühlungs-Temperatur verwendet werden..

Das erfindungsgemäße Verfahren zur Steuerung der Schaumbildung in einem Schaum-Behälter, geht aus von diesem Schaum-Behälter, dem Schaum mit einer Temperatur, die im Bereich der Zuführung in den Schaum-Behälter vorliegt, zugeführt wird, der dort aufwächst und als aus dem Schaum entstandene Flüssigkeit aus dem Schaum-Behälter abgeführt wird. An der Grenzfläche der Schaumausbreitung setzt wiederum der erfinderische Grundgedanke an. Der aufwachsende Schaum erfährt, beginnend an einem auf den Schaum-Behälter bezogenen und vorgegebenen Schaumhöhensoll, zunächst eine Erwärmung von der Temperatur, die im Bereich der Zuführung in den Schaum-Behälter vorliegt, auf eine Erwärmungs-Temperatur in einem aus einem Heiz- und einem Kühlregister bestehenden Registersystem. Der weiter aufwachsende erwärmte Schaum erfährt anschließend, beginnend in einem Kühlabstand vom Schaumhöhensoll, eine Abkühlung auf eine Abkühlungs-Temperatur in dem Registersystem.

Die Mittel zur Durchführung des Wärmeaustauschs zur Erwärmung und Abkühlung des Schaumes, nämlich das aus einem Heiz- und einem Kühlregister bestehenden Registersystem, sind in einer Aufwachsrichtung des Schaumes strömungsdurchlässig ausgebildet.

Die Erwärmungs- und/oder die Abkühlungs-Temperatur werden/wird in Abhängigkeit von den Eigenschaften des Schaums und/oder den physikalischen Randbedingungen eingestellt, wobei unter den Eigenschaften des Schaumes der Volumenstrom, die Viskosität, der Druck, die Temperatur und/oder die Zusammensetzung des Schaumes im Bereich der Zuführung in den Schaum-Behälter und unter den physikalischen Randbedingungen der Druck in dem Schaum-Behälter verstanden wird.

Das jeweilige erfindungsgemäße Verfahren ist grundsätzlich derart angelegt, dass die unterschiedlich temperierten Schaumbereiche, bedingt durch ihre Erwärmung und ihre Abkühlung, entweder begrenzt ineinandergreifen bzw. sich überlappen oder, ohne diesbezüglich ineinanderzugreifen bzw. sich zu überlappen, sich aneinanderreihen. Es hat sich als vorteilhaft erwiesen, wie dies ein Vorschlag vorsieht, wenn ein Erstreckungsbereich des sich erwärmenden und erwärmten Schaumes und ein Erstreckungsbereich des sich abkühlenden und abgekühlten Schaumes, in einer zugeordneten Aufwachsrichtung des Schaumes gesehen, unmittelbar aneinandergereiht sind, ohne sich gegenseitig vollständig oder wenigstens partiell zu überlappen. Bei dieser Ausgestaltung des Verfahrens kann sich der Schaum zunächst über seine gesamte Generierungsfront bzw. Bevorratungsfläche, aus der er aufwächst, unbehindert erwärmen und ausdehnen, um dann anschließend unter den gleichen Geometriebedingungen eine unbehinderte Abkühlung und Zerstörung zu erfahren.

Die hygienischen und sanitären Erfordernisse, die an die Behandlung und Verarbeitung flüssiger Nahrungsmittel zu stellen sind, werden im Rahmen des jeweiligen erfindungsgemäßen Verfahrens hinreichend dadurch erfüllt, dass die Erwärmung und die Abkühlung des Schaumes durch indirekten Wärmeaustausch erfolgt, beispielsweise an Wänden von Wärmeaustauschern, die in Aufwachsrichtung des Schaumes weitestgehend für diesen durchlässig sind. Als Wärmeträgermedium für den indirekten Wärmeaustausch sind ein Heizmittel, vorzugsweise Heißwasser, und ein Kühlmittel, vorzugsweise Kaltwasser, vorgesehen. Es kann aber auch heißer Dampf oder heißes Gas Verwendung finden. Das Heizmittel weist zielführend und abhängig von der Flüssigkeits-Temperatur der Flüssigkeit oder der Temperatur, die im Bereich der Zuführung in den Schaum-Behälter vorliegt, vorzugsweise eine Heizmittel-Temperatur bis auf 90 Grad Celsius auf. Das Kühlmittel weist zielführend und ebenfalls abhängig von der jeweiligen Flüssigkeits- oder der Schaum-Temperatur vorzugsweise eine Kühlmittel-Temperatur bis hinab zu 12 bis 14 Grad Celsius für Milch und bis hinab zu 6 Grad Celsius für Fruchtsäfte auf, wodurch eine Abkühlung des Schaumes auch auf ein Temperaturniveau unterhalb der Flüssigkeits- oder Schaum-Temperatur realisierbar ist.

Die Erfindung schlägt weiterhin vor, dass die Erwärmung und/oder die Abkühlung des Schaumes durch direkten Wärmeaustausch auf der Basis des Peltier-Effektes erfolgen/erfolgt. In diesem Falle lässt sich das Heiz- und Kühlregister bei geeigneter Ausführung der Peltier-Elemente sehr reinigungsfreundlich mit Blick auf eine CIP-Reinigung ausgestalten.

Es hat sich als besonders zielführend herausgestellt, wenn eine Kühlleistung im Bereich der Abkühlung des Schaumes größer als eine Heizleistung im Bereich der Erwärmung des Schaumes ausgelegt ist. Über die Bemessungsrelation zwischen einer notwendigen Heiz- und Kühlfläche hinaus, gegeben durch die geometrischen Auslegungsverhältnisse, kann die Relation zwischen Heiz- und Kühlleistung über die wirksame treibende Temperaturdifferenz in den jeweiligen Wärmeaustauschern der Heiz- und Kühlzone verändert werden. Hier stehen als in Grenzen veränderbare Einflussgrößen die Heizmittel- und Kühlmittel-Temperatur zur Verfügung.

Die Erwärmungs- und/oder die Abkühlungs-Temperatur werden/wird, wie dies ein weiterer Vorschlag vorsieht, mittels einer vor oder im Zuge der Inbetriebnahme des Flüssigkeits- oder des Schaum-Behälters erstellten und hinterlegten Einstellfunktion eingestellt. In dieser Einstellfunktion sind die optimalen Bedingungszusammenhänge zwischen den Eigenschaften der zu behandelnden und verarbeitenden Flüssigkeit und/oder den physikalischen Randbedingungen einerseits und der Erwärmungs- und der Abkühlungs-Temperatur andererseits hinterlegt, sodass ein vollautomatisiertes Verfahren zur Steuerung der Schaumbildung in dem Flüssigkeits-Behälter für Flüssigkeiten und dem Schaum-Behälter für Schäume durchführbar ist.

Der Flüssigkeits-Behälter für Flüssigkeiten mit einer Vorrichtung zur Steuerung der Schaumbildung in dem Flüssigkeits-Behälter, geeignet zur Durchführung des zugeordneten erfindungsgemäßen Verfahrens, besteht in an sich bekannter Weise aus einem Flüssigkeits-Behälter, der einen Eintritt für die Flüssigkeit und einen Austritt für eine behandelte Flüssigkeit aufweist. Die Flüssigkeit bildet in dem Flüssigkeits-Behälter eine freie Oberfläche aus, deren Niveau vorzugsweise von einer Niveausteuereinrichtung gesteuert wird.

Die Vorrichtung zur Steuerung der Schaumbildung in dem Flüssigkeits-Behälter zeichnet sich erfindungsgemäß dadurch aus, dass ein aus einem Heiz- und einem Kühlregister bestehendes Registersystem vorgesehen ist, das im Bereich der Schaumbildung mit dem Heizregister von der freien Oberfläche mit einem Heizabstand beabstandet ist.

Das Kühlregister ist, in einer Aufwachsrichtung des Schaumes gesehen, gegenüber dem Heizregister um einen Kühlabstand versetzt angeordnet. Dem Registersystem ist eine Steuereinrichtung zugeordnet, die eine Heizleistung des Heizregisters und/oder eine Kühlleistung des Kühlregisters in Abhängigkeit von den Eigenschaften der Flüssigkeit und/oder den physikalischen Randbedingungen verändert. Die Steuereinrichtung ist mit einer Messeinrichtung verbunden, die wenigstens eine der Eigenschaften der Flüssigkeit oder der behandelten Flüssigkeit und/oder die physikalischen Randbedingungen ermittelt. Die Messeinrichtung kann mit Blick auf die physikalischen Randbedingungen so eingerichtet sein, dass sie eine Messeinrichtung für die Detektion von Schaum ist (z.B. Schaumsensor), wobei dieser Schaum oberhalb des Kühlregisters aufwächst und dort ein Schaumsignal generiert, das an die Steuereinrichtung übermittelt wird.

Der Schaum-Behälter für Schäume mit einer Vorrichtung zur Steuerung der Schaumbildung in dem Schaum-Behälter, geeignet zur Durchführung des zugeordneten Verfahrens, besteht in an sich bekannter Weise aus dem Schaum-Behälter, der einen Eintritt für den Schaum und einen Austritt für eine aus dem Schaum entstandene Flüssigkeit aufweist. Der Schaum wird dem Schaum-Behälter letztlich zum Zwecke eines erwünschten Zerfalls zugeführt und wächst dort auf.

Die Vorrichtung zur Steuerung der Schaumbildung in dem Schaum-Behälter zeichnet sich erfindungsgemäß dadurch aus, dass ein aus einem Heiz- und einem Kühlregister bestehendes Registersystem vorgesehen ist, das mit dem Heizregister in einer durch ein Schaumhöhensoll bestimmten Höhe im Schaum-Behälter positioniert ist. Das Kühlregister ist, in einer Aufwachsrichtung des Schaumes gesehen, gegenüber dem Heizregister um einen Kühlabstand versetzt angeordnet. Dem Registersystem ist eine Steuereinrichtung zugeordnet, die eine Heizleistung des Heizregisters und/oder eine Kühlleistung des Kühlregisters in Abhängigkeit von den Eigenschaften des Schaumes und/oder den physikalischen Randbedingungen verändert. Die Steuereinrichtung ist mit einer Messeinrichtung verbunden, die wenigstens eine der Eigenschaften des Schaumes und/oder die physikalischen Randbedingungen ermittelt. Die Messeinrichtung kann mit Blick auf die physikalischen Randbedingungen so eingerichtet sein, dass sie eine Messeinrichtung für die Detektion von Schaum ist (z.B. Schaumsensor), wobei dieser Schaum oberhalb des Kühlregisters aufwächst und dort ein Schaumsignal generiert, das an die Steuereinrichtung übermittelt wird.

Unter dem Heiz- und dem Kühlregister für den indirekten Wärmeaustausch soll jeweils ein Wärmeaustauscher verstanden werden, der eine Vielzahl von hohlen Gebilden aufweist, die jeweils von ebenen oder gekrümmten Wänden begrenzt sind. Die hohlen Gebilde sind im Verbund miteinander außenseits in der Aufwachsrichtung des Schaumes strömungsdurchlässig. Die ebenen Wände bilden durchströmbare Kammern, die unterschiedliche Geometrien, wie beispielsweise rechteckförmige, quadratische oder dreieckförmige, aufweisen können. Die gekrümmten Wände begrenzen beispielsweise ovale, elliptische oder kreisförmige Durchströmungsquerschnitte. Die hohlen Gebilde werden innenseits von einem Wärmeträgermedium durchströmt, einem Heizmittel im Heizregister und einem Kühlmittel im Kühlregister.

Das Heiz- und/oder das Kühlregister für den direkten Wärmeaustausch ist gemäß einem Vorschlag jeweils als Peltier-Element ausgebildet.

Die Erfindung schlägt weiterhin, bevorzugt für den indirekten Wärmeaustausch unter Verwendung jeweils eines Wärmeträgermediums, Ausführungsformen des aus einem Heiz- und einem Kühlregister bestehenden Registersystems für die Vorrichtung zur Steuerung der Schaumbildung in dem Flüssigkeits- und in dem Schaum-Behälter vor, wobei der Flüssigkeits- und der Schaum-Behälter, geeignet zur Durchführung des zugeordneten erfindungsgemäßen Verfahrens, vorstehend beschrieben wurden.

Es hat sich mit Blick auf eine wirksame Schaumzerstörung als besonders zielführend erwiesen, wenn eine gesamte Kühlfläche des Kühlregisters größer als eine gesamte Heizfläche des Heizregisters ausgelegt ist. Unter gesamter Kühl- und gesamter Heizfläche soll jeweils die Summe aller erwärmend oder abkühlend auf den Schaum einwirkenden Wärmeaustauscherflächen des Kühl- und Heizregister verstanden werden.

Eine konstruktiv einfache und die hygienischen und sanitären Erfordernisse bei der Behandlung und Verarbeitung insbesondere flüssiger Nahrungsmittelprodukte sicherstellende Ausführungsform ist nach einem Vorschlag gegeben, wenn das Heizregister aus ersten Rohren und das Kühlregister aus zweiten Rohren besteht. Dabei sind die ersten Rohre und die zweiten Rohre, jeweils für sich, reihenförmig nebeneinander und voneinander beabstandet angeordnet. Die ersten Rohre sind von der schaumgenerierenden freien Oberfläche in dem Flüssigkeits-Behälter mit dem Heizabstand und in dem Schaum-Behälter auf der durch das Schaumhöhensoll bestimmten Höhe positioniert. Die zweiten Rohre sind im Flüssigkeits-Behälter mit dem Kühlabstand von dem Heizabstand, d.h. ausgehend von dem Heizabstand, und in dem Schaum-Behälter mit dem Kühlabstand von der durch das Schaumhöhensoll bestimmten Höhe, d.h. ausgehend von dem Schaumhöhensoll, positioniert. Quer zur jeweiligen Aufwachsrichtung sind die ersten und zweiten Rohre ebenfalls gegeneinander versetzt angeordnet, und zwar in einfacher Weise dadurch, dass zweite Rohre über den und verteilt auf die jeweiligen Lücken zwischen den ersten Rohren positioniert sind.

Um zu verhindern, dass das mit Rohren realisierte Kühlregister nicht in das Heizregister eingreift bzw. sich mit diesem in Gänze oder in Teilbereichen überlappt, wird vorgeschlagen, dass der Kühlabstand stets größer als ein größter erster Durchmesser der ersten Rohre im Kühlabstand ist. Eine Vereinfachung der jeweiligen Konstruktion ist gegeben, wenn die ersten Rohre und die zweiten Rohre jeweils unter sich durchmessergleich sind, und die gewünschte Relation zwischen Kühl- und Heizfläche lässt sich unter den vorstehenden Durchmessergegebenheiten leichter und flexibler auslegen, wenn das erste Rohr einen größeren Durchmesser als das zweite Rohr aufweist.

Es wird weiter vorgeschlagen, die ersten Rohre und/oder die zweiten Rohre jeweils als Monorohr auszubilden. Durch diese Ausführung werden strömungstechnische Probleme bei der Verteilung des Heiz- und Kühlmittels vermieden. Es ist weiterhin vorgesehen, das erste Rohr und das zweite Rohr, jeweils ausgebildet als Monorohr, spiralförmig gewickelt auszuführen. Diese Ausführung schafft weiterhin die Möglichkeit, die derart gewickelten Monorohre, bezogen auf die Aufwachsrichtung des Schaumes und quer hierzu, sehr einfach so anzuordnen, dass sie, in Aufwachsrichtung gesehen, einerseits jeweils strömungsdurchlässig sind und andererseits die erforderliche Reihenschaltung des Heiz- und Kühlregisters realisieren. Dies gelingt zweckmäßig dadurch, dass die Monorohre der Kühlzone einerseits in Aufwachsrichtung axial versetzt zu den Monorohren der Heizzone angeordnet und andererseits, in radialer Richtung, über den jeweiligen Lücken zwischen den Monorohren der Heizzone positioniert sind. Eine diesbezügliche vorteilhafte Ausführungsform sieht vor, dass jeweils zwei zweite Rohre über der jeweiligen Lücke zwischen zwei benachbarten ersten Rohren symmetrisch und gleichverteilt positioniert sind.

Hinsichtlich einer einfachen und leicht zu variierenden Justierung und Befestigung des Registersystems in beliebiger Ausgestaltung oder in der Ausgestaltung mit ersten und zweiten Rohren werden zwei Lösungen vorgeschlagen. Beide Lösungen sehen gleichermaßen vor, dass sich das Heiz- und Kühlregister an dem Flüssigkeits- oder dem Schaum-Behälter über mehrere Träger abstützt, die über den Umfang des jeweiligen Behälters gleichverteilt angeordnet sind und sich sternförmig zum Zentrum des jeweiligen Behälters hin erstrecken. Die erste Lösung zeichnet sich dadurch aus, dass sich der Verlauf jedes Trägers in Bezug zum Heizregister aus einer unteren Kontur des Heizregisters ergibt, an die sich jeder Träger von unten anschmiegt. Bei der zweiten Lösung ergibt sich der Verlauf jedes Trägers in Bezug zum Heizregister aus der Positionierung des ersten Rohres, an die sich jeder Träger von unten tangential anschmiegt. Bei beiden Lösungen werden vorzugsweise vier Träger vorgesehen.

Bei der Ausgestaltung des Registersystems mit ersten und zweiten Rohren gelingt die erfindungsgemäß geforderte Positionierung und Befestigung der Rohre sowohl in Aufwachsrichtung des Schaumes als auch quer hierzu auf sehr einfache Weise dadurch, dass als Bezugslinie zur Positionierung und Befestigung eine gedachte Berührungslinie genutzt wird, die sich aus den Berührungspunkten zwischen den ersten Rohren und dem jeweils tangential an diesen anliegenden Träger ergibt. Im Verlauf der Berührungslinie sind Halterungsmittel für die ersten und die zweiten Rohre an dem Träger vorgesehen, die mit dem Träger fest verbunden sind. Die Halterungsmittel sind vorzugsweise blechförmig ausgebildet und hochkant einerseits in Richtung einer Längsachse des Flüssigkeits- oder des Schaum-Behälters und andererseits in Richtung der Berührungslinie ausgerichtet, wodurch das Aufwachsen des Schaumes möglichst wenig gehemmt wird. Zwei benachbarte Halterungsmittel fixieren dabei jeweils ein erstes Rohr und mindestens ein zweites Rohr in Richtung der Berührungslinie unverschieblich.

## KURZBESCHREIBUNG DER ZEICHNUNGEN

Eine eingehendere Darstellung der Erfindung ergibt sich aus der folgenden Beschreibung und den beigefügten Figuren der Zeichnung sowie aus den Ansprüchen. Während die Erfindung in den verschiedensten Ausführungsformen realisiert ist, werden in der Zeichnung ein bevorzugtes Ausführungsbeispiel eines Flüssigkeits-Behälters und eines Schaum-Behälters gemäß der Erfindung dargestellt und beschrieben, wobei der erfindungsgemäße Schaum-Behälter für sich allein oder in Kombination mit einem Flüssigkeits-Behälter nach dem Stand der Technik vorgesehen ist. Darüber hinaus wird ein bevorzugtes Ausführungsbeispiel eines Registersystems, das aus einem Heiz- und einem Kühlregister besteht, für die erfindungsgemäßen Vorrichtung zur Steuerung der Schaumbildung in dem Flüssigkeits- oder Schaum-Behälter, geeignet zur Durchführung des zugeordneten erfindungsgemäßen Verfahrens, dargestellt und nachfolgend nach Aufbau und Funktion beschrieben. Es zeigen

**Figur 1**  in schematischer Darstellung einen Flüssigkeits-Behälter mit verschiedenen Möglichkeiten der Anordnung eines Eintritts für die zu behandelnde Flüssigkeit und eines Austritts für die behandelte Flüssigkeit nach dem Stand der Technik zusammen mit einem erfindungsgemäßen Registersystem, bestehend aus einem Heiz- und einem Kühlregister;

**Figur 2**  in schematischer Darstellung einen Schaum-Behälter nach dem Stand der Technik zusammen mit einem erfindungsgemäßen Registersystem gemäß **Figur 1;**

**Figur 3**  in schematischer Darstellung einen Flüssigkeits-Behälter nach dem Stand der Technik in an sich bekannter Kombination mit einem erfindungsgemäßen Schaum-Behälter gemäß **Figur 2;**

**Figur 4**  im Meridianschnitt und in konkretisierter Ausführung die wesentlichen Teile eines Flüssigkeits-Behälters mit einem erfindungsgemäßen Registersystem gemäß **Figur 1** entsprechend einem in **Figur 6** mit **A-A** gekennzeichneten Schnittverlauf;

**Figur 5**  in perspektivischer Darstellung den Flüssigkeits- oder Schaum-Behälter gemäß **Figur 4** bzw. **Figur 2** in jeweils konkretisierter Ausführungsform, wobei durch Weglassen eines Mantels und eines oberen Bodens des jeweiligen Behälters die erfindungsgemäße Vorrichtung freiliegt, und in schematischer Darstellung eine Steuereinrichtung mit zugeordneten Mitteln zur Beaufschlagung eines aus einem Heiz- und einem Kühlregister bestehenden Registersystems mit einem Heiz- und Kühlmittel, wobei das Registersystem in seinem zentralen Bereich nicht dargestellt ist;

**Figur 6**     in der Draufsicht den Flüssigkeits- oder Schaum-Behälter gemäß den **Figuren 4** und **5,** wobei das Registersystem in seinem zentralen Bereich nicht dargestellt ist;

**Figur 7**     in vergrößerter Darstellung einen in **Figur 4** mit **"B"** gekennzeichneten ersten Ausschnitt im Bereich der erfindungsgemäßen Vorrichtung;

**Figur 8**     in nochmals vergrößerter Darstellung einen in **Figur 7** mit **"C"** gekennzeichneten zweiten Ausschnitt aus dem ersten Ausschnitt gemäß **Figur 7** und

**Figur 9**     in Vorderansicht und Draufsicht ein in den **Figuren 7** und **8** dargestelltes Halterungsmittel für Rohre des erfindungsgemäßen Registersystems in einer vergrößerten Darstellung.

## DETAILLIERTE BESCHREIBUNG

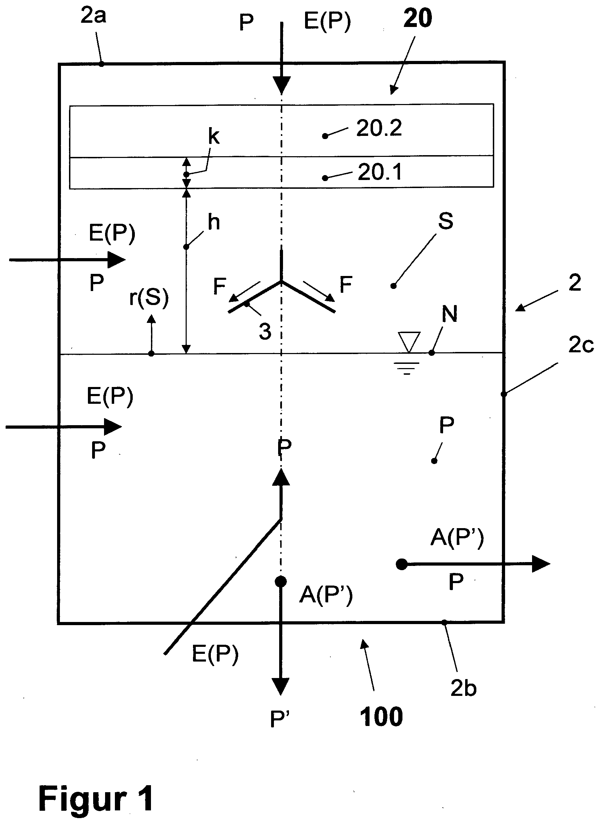

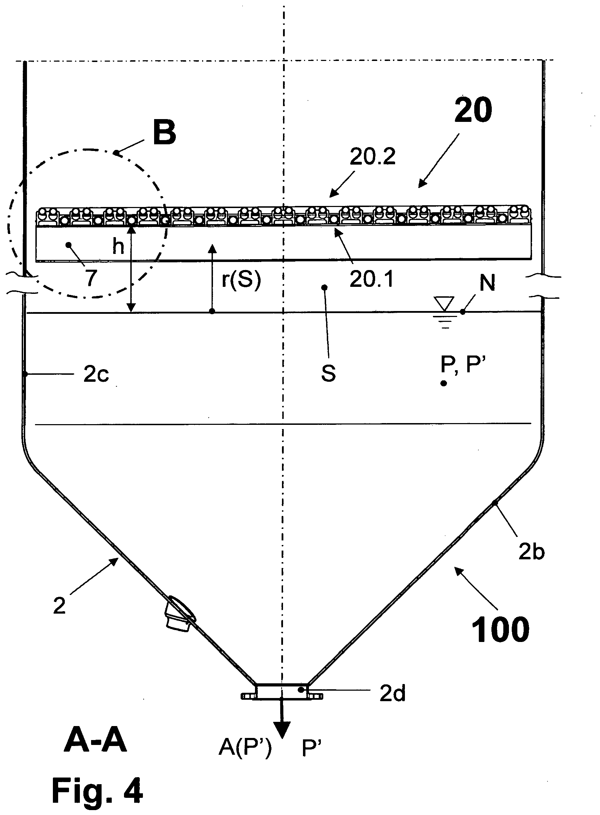

Die Erfindung geht aus von einem Flüssigkeits-Behälter 100 für Flüssigkeiten P nach dem Stand der Technik **(Figuren 1** und **4),** beispielsweise einer Entgasungsvorrichtung, in der die Flüssigkeit P, beispielsweise ein flüssiges Nahrungsmittelprodukt, entgast wird. Der Flüssigkeits-Behälter 100 besteht aus einem Behälter 2 in Form eines im Wesentlichen zylinderförmigen Behältermantels 2c mit einem unteren Boden 2b und einem oberen Boden 2a. Der untere Boden 2b weist entweder, wie in **Figur 4** dargestellt, einen zentralen Ablaufstutzen 2d mit einem Austritt der behandelten Flüssigkeit A(P') für eine entgaste bzw. behandelte Flüssigkeit P' auf, oder einen tangential angeordneten Ablaufstutzen (in **Figur 1** schematisch angedeutet, in **Figur 4** nicht dargestellt). Die Flüssigkeit P wird über einen Eintritt der Flüssigkeit E(P) dem Flüssigkeits-Behälter 100 zugeführt und bildet dort eine Flüssigkeitsvorlage. Diesbezüglich sind folgende Möglichkeiten bekannt:

- ein Eintritt der Flüssigkeit E(P), jeweils über den unteren Boden 2b, und zwar zentral von unten, der dann in der Regel durch den Ablaufstutzen 2d konzentrisch hindurchgeführt ist, oder seitlich von unten,
- ein Eintritt der Flüssigkeit E(P) über den Behältermantel 2c, und zwar entweder oberhalb oder unterhalb einer freien Oberfläche N bzw. eines freien Niveaus der Flüssigkeitsvorlage oder
- ein Eintritt der Flüssigkeit E(P) von oben.

Der Eintritt der Flüssigkeit E(P) von unten oder oben wird in der Regel über ein nicht dargestelltes Zulaufrohr weitergeführt, das endseitig in einem ebenfalls nicht dargestellten Umfangsringspalt eines Einlaufventils oder zwischen einem Verteilerschirm 3 und einer nicht dargestellten Prallplatte endet. Über den Umfangsringspalt wird die Flüssigkeit P entweder als Freistrahl (Einlaufventil) oder an dem Verteilerschirm 3 als Flüssigkeitsfilm F in den Flüssigkeits-Behälter 100 ausgebracht. Mit einer nicht dargestellten Niveausteuereinrichtung wird die freie Oberfläche N der bereits weitestgehend entgasten bzw. noch zu entgasenden Flüssigkeit P', P, die die Flüssigkeitsvorlage im Flüssigkeits-Behälter 2 bildet, eingestellt. Der teilentgaste bzw. weitestgehend entgaste Flüssigkeitsfilm F tritt am unteren Ende des Verteilerschirms 3 in die freie Oberfläche N ein. Die über den Verteilerschirm 3 in Form des Flüssigkeitsfilms F auf die freie Oberfläche N aufgeschichteten und in diese eintretenden Flüssigkeitsfraktionen verweilen mit einer mittleren Verweilzeit in dem Flüssigkeits-Behälter 2 und können dort mit Hilfe des Gasblasenauftriebs über die freie Oberfläche N weiter entgasen.

Ein bei der Behandlung bzw. Entgasung der Flüssigkeit P sich bildender Schaum S wird oberhalb und aus der freien Oberfläche N heraus freigesetzt und wächst in Richtung eines von dem Behältermantel 2c gebildeten Innenraumes und in Richtung eines von dem oberen Boden 2a gebildeten Kopfraumes auf. Eine jeweilige Aufwachsrichtung des Schaumes ist mit r(S) bezeichnet.

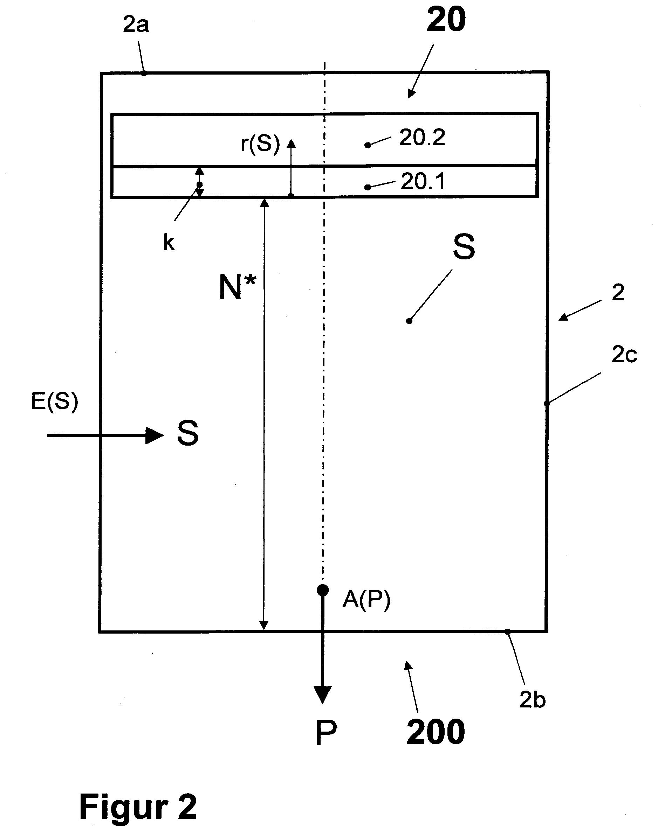

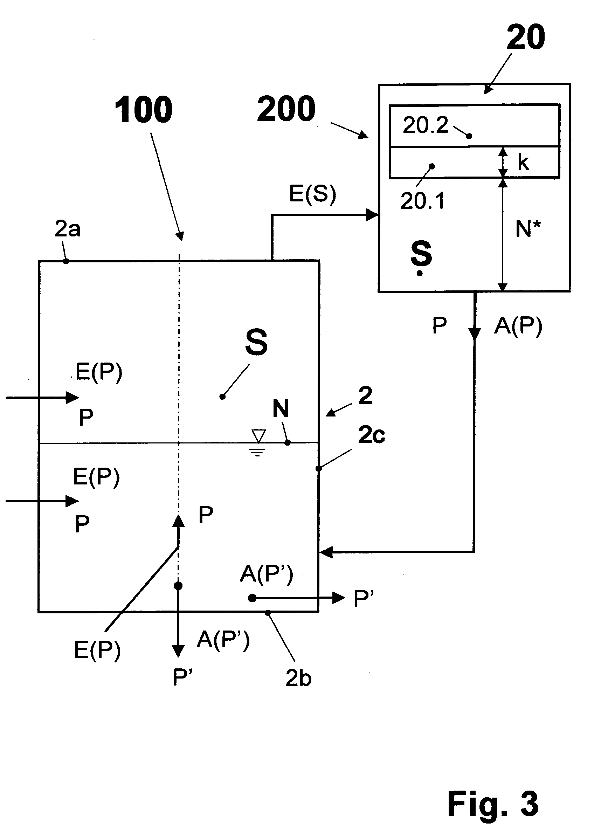

Die Erfindung geht weiterhin aus von einem Schaum-Behälter 200 für Schaum S nach dem Stand der Technik **(Figuren 2** und **3),** beispielsweise einem Schaumsammelbehälter, in dem an sich unerwünschter Schaum S aufgenommen wird und bis zu seinem erwünschten Zerfall in Flüssigkeit P dort verbleibt. Der Schaum-Behälter 200 besteht, ebenso wie der Flüssigkeits-Behälter 100, aus einem Behälter 2 in Form eines im Wesentlichen zylinderförmigen Behältermantels 2c mit einem unteren Boden 2b und einem oberen Boden 2a. Der Schaum-Behälter 200 weist einen Eintritt des Schaumes E(S) für den Schaum S und einen Austritt der Flüssigkeit A(P) für die aus dem Schaum S entstandene Flüssigkeit (P) auf.

In **Figur 3** ist eine Kombination des vorstehend skizzierten Flüssigkeits-Behälters 100 gemäß **Figur 1** und des Schaum-Behälters 200 gemäß **Figur 2** dargestellt. Der in dem Flüssigkeits-Behälter 100 entstehende Schaum S wird aus dem Kopfraum des Behälters 2 abgeführt und dem Schaum-Behälter 200 mit einer Temperatur, die im Bereich der Zuführung in den Schaum-Behälter 200 vorliegt, zugeführt. Die in dem Schaum-Behälter 200 aus dem Schaum S entstehende Flüssigkeit P wird der Flüssigkeitsvorlage im Flüssigkeits-Behälter 100 unterhalb der freien Oberfläche N zugeführt.

Ein erfindungsgemäßes Registersystem 20, bestehend aus einem Heizregister 20.1 und einem Kühlregister 20.2, ist in den **Figuren 1** bis **3** schematisch und in den **Figuren 4** bis **9** in konkreter Ausführung dargestellt und wird nachfolgend anhand der Figuren **4** bis **9** beschrieben.

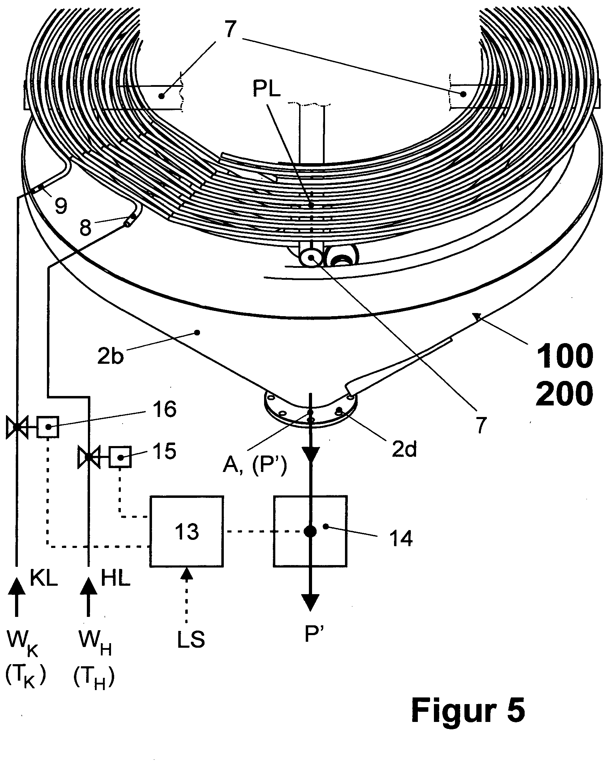

Das Registersystem 20 ist in dem Flüssigkeits-Behälter 100 **(Figuren 1, 4** bis **8)** so angeordnet, dass das Heizregister 20.1 von der freien Oberfläche N mit einem Heizabstand h beabstandet ist. Das Kühlregister 20.2 ist, in der Aufwachsrichtung des Schaumes r(S) gesehen, gegenüber dem Heizregister 20.1 um einen Kühlabstand k versetzt angeordnet (siehe auch **Figur 1**). Dem Registersystem 20 ist eine Steuereinrichtung 13 zugeordnet **(Figur 5)**, die eine Heizleistung HL des Heizregisters 20.1 und/oder eine Kühlleistung KL des Kühlregisters 20.2 in Abhängigkeit von den Eigenschaften der Flüssigkeit P oder der behandelten Flüssigkeit P' und/oder den physikalischen Randbedingungen verändert. Die Steuereinrichtung 13 ist mit einer Messeinrichtung 14 verbunden, die wenigstens eine der Eigenschaften der Flüssigkeit P, P' und/oder die physikalischen Randbedingungen ermittelt.

Das aus einem Heiz- 20.1 und einem Kühlregister 20.2 bestehende Registersystem 20 ist in dem Schaum-Behälter 200 so angeordnet, dass es mit seinem Heizregister 20.1 in einer durch ein Schaumhöhensoll N* bestimmten Höhe im Schaum-Behälter 200 positioniert ist **(Figuren 2, 3** und **5** bis **8)**. Das Kühlregister 20.2 ist, in einer Aufwachsrichtung des Schaumes r(S) gesehen, gegenüber dem Heizregister 20.1 um einen Kühlabstand k versetzt angeordnet. Dem Registersystem 20 ist eine Steuereinrichtung 13 zugeordnet, die eine Heizleistung HL des Heizregisters 20.1 und/oder eine Kühlleistung KL des Kühlregisters 20.2 in Abhängigkeit von den Eigenschaften des Schaumes S und/oder den physikalischen Randbedingungen verändert. Die Steuereinrichtung 13 ist mit einer Messeinrichtung 14 verbunden, die wenigstens eine der Eigenschaften des Schaumes S und/oder die physikalischen Randbedingungen ermittelt. Weiterhin kann im Kopfraum des Flüssigkeits- oder des Schaum-Behälters 100, 200, oberhalb des Kühlregisters 20.2, eine Messeinrichtung 14 angeordnet sein, die eine Messeinrichtung für die Detektion von Schaum ist (z.B. Schaumsensor), wobei dieser Schaum oberhalb des Kühlregisters 20.2 aufwächst und dort ein Schaumsignal LS generiert, das an die Steuereinrichtung 13 übermittelt wird **(Figur 5)**.

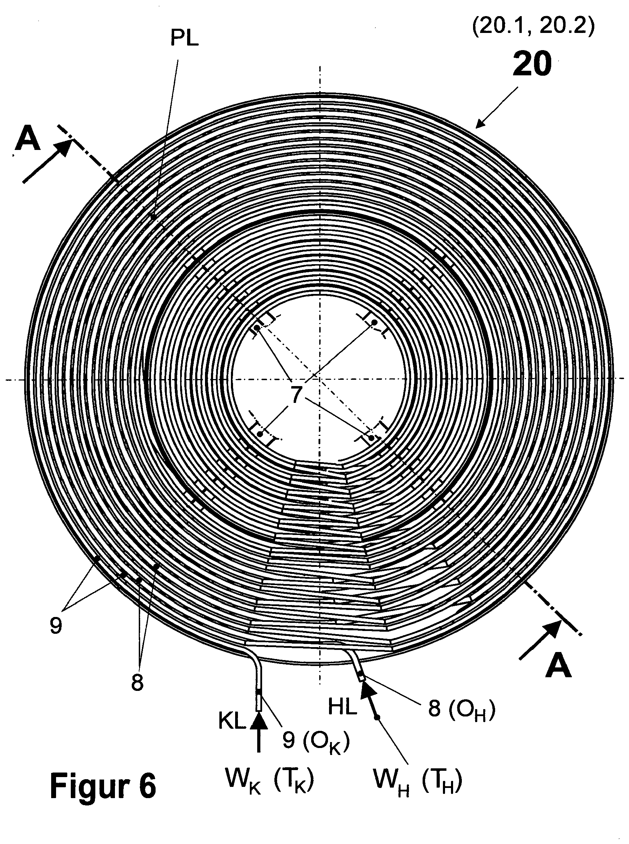

Die Registersysteme 20 für den Flüssigkeits- oder den Schaum-Behälter 100, 200 sind zweckmäßig im Wesentlichen baugleich ausgeführt. Im Rahmen des indirekten Wärmeaustauschs ist das Heizregister 20.1 von einem Heizmittel $W_H$, das eine Heizmittel-Temperätur $T_H$ aufweist, und das Kühlregister 20.2 ist von einem Kühlmittel $W_K$, das eine Kühlmittel-Temperatur $T_K$ aufweist, durchströmt **(Figuren 5** und **6)**. Eine gesamte Kühlfläche $O_K$ des Kühlregisters 20.2 ist vorzugsweise größer als eine gesamte Heizfläche $O_H$ des Heizregisters 20.1 ausgelegt. Die Heizleistung HL wird im vorliegenden Ausführungsbeispiel über den Volumenstrom des Heizmittels $W_H$ und/oder die Kühlleistung KL wird über den Volumenstrom des Kühlmittels $W_K$ in Abhängigkeit von den Eigenschaften der Flüssigkeiten P, P' bzw. der Schäume S und/oder den physikalischen Randbedingungen verändert **(Figur 5)**. Über ein mit der Steuereinrichtung 13 signaltechnisch in Verbindung stehendes erstes Ventil 15 wird der Durchfluss des Heizmittels $W_H$ durch das Heizregister 20.1 und ein über zweites Ventil 16 wird der Durchfluss des Kühlmittels $W_K$ durch das Kühlregister 20.2 gesteuert.

Nach einer vorteilhaften und bevorzugten Ausführungsform besteht das Heizregister 20.1 aus ersten Rohren 8 und das Kühlregister 20.2 aus zweiten Rohren 9 **(Figuren 4** bis **8)**. Die ersten Rohre 8 und die zweiten Rohre 9 sind, jeweils für sich, reihenförmig nebeneinander und voneinander beabstandet angeordnet. Die ersten Rohre 8 sind von der freien Oberfläche N mit dem Heizabstand h (bezieht sich auf den Flüssigkeits-Behälter 100) oder auf der durch das Schaumhöhensoll N* bestimmten Höhe (bezieht sich auf den Schaum-Behälter 200) positioniert. Der notwendige Versatz der ersten und der zweiten Rohre 8. 9 zueinander und in der Aufwachsrichtung r(S) des Schaumes S ist dadurch sichergestellt, dass die zweiten Rohre 9 mit dem Kühlabstand k von dem Heizabstand h oder mit dem Kühlabstand k von der durch das Schaumhöhensoll N* bestimmten Höhe positioniert sind. Eine vollständige Überdeckung der schaumgenerierenden Oberfläche im Flüssigkeits-Behälter 100 bzw. der gesamten Bevorratungsfläche im Schaum-Behälter 200 wird dadurch sichergestellt, dass zweite Rohre 9 über den und verteilt auf die jeweiligen Lücken zwischen den ersten Rohren 8 angeordnet sind.

Wenn, wie dies vorzugsweise vorgesehen ist, der Kühlabstand k stets größer als ein größter erster Durchmesser $D_H$ der ersten Rohre 8 im Kühlabstand k ist, wird ein vollständiges oder wenigstens teilweises Ineinandergreifen bzw. eine diesbezügliche Überlappung von Heiz- und Kühlregister 20.1, 20.2 verhindert.

Die ersten Rohre 8 und die zweiten Rohre 9 sind jeweils unter sich vorzugsweise durchmessergleich ausgeführt, und das erste Rohr 8 weist dabei vorzugsweise einen größeren Durchmesser, den ersten Durchmesser $D_H$, als das zweite Rohr 9 mit einem zweiten Durchmesser $D_K$ auf.

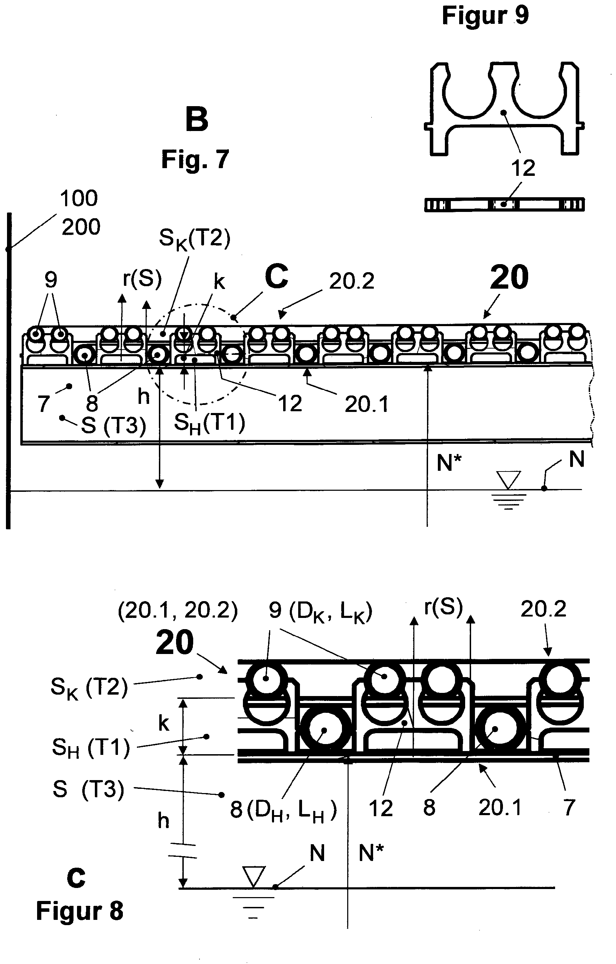

Die Konstruktion des Registersystems 20 in der Rohrausführung vereinfacht sich wesentlich, wenn die ersten Rohre 8 und/oder die zweiten Rohre 9 jeweils als Monorohr ausgebildet sind. Eine weitere Vereinfachung der Konstruktion ergibt sich dadurch, dass das erste Rohr 8 und das zweite Rohr 9, jeweils ausgebildet als Monorohr, spiralförmig gewickelt ausgeführt sind. Eine einfache und lückenlose Überdeckung der schaumgenerierenden Oberfläche der Flüssigkeit P bzw. der Schaumfläche des Schaumes S wird vorzugsweise dadurch erreicht, dass jeweils zwei zweite Rohre 9 über der jeweiligen Lücke zwischen zwei benachbarten ersten Rohren 8 symmetrisch und gleichverteilt positioniert sind **(Figuren 7** und **8)**.

Mit Blick auf eine zweckmäßige und zielführende Auslegung des Registersystems 20 in der rohrförmigen Ausgestaltung und hier vorzugsweise in der jeweiligen Ausführung als Monorohrwärmeaustauscher, insbesondere mit Blick auf das Verhältnis zwischen Heiz- und Kühlfläche $O_H$, $O_K$, sieht die konkrete gegenständliche Ausführung diesbezüglich beispielsweise vor, die Kühlfläche $O_K$ über das zweite Rohr 9 so auszulegen, dass es den zweiten Durchmesser $D_K = 8$ mm und eine Gesamtlänge, eine zweite Länge $L_K$, aufweist. Die Heizfläche $O_H$ wird im Kontext zur vorg. Kühlfläche $O_K$ über das erste Rohr 8 so ausgelegt, dass es den ersten Durchmesser $D_H = 10$mm und eine Gesamtlänge, eine erste Länge $L_H = L_K/2$, aufweist. Hinsichtlich des vorstehend geforderten Verhältnisses zwischen Kühlleistung KL und Heizleistung HL ergibt sich damit im Ausführungsbeispiel ein Verhältnis von Kühlfläche $O_K$ und Heizfläche $O_H$ von

$$O_K/O_H = d_K L_K/d_H L_H = 8 L_K/10 L_H = 8 L_K/(10 L_K/2) = 2 \times 8/10 = 1,6 \; ,$$

womit die Bedingung, dass die Kühlfläche $O_K$ größer als die Heizfläche $O_H$ auszulegen ist, hinreichend erfüllt ist.

Wesentlich bei der Ausgestaltung des Registersystems 20 ist, dass die Schaumbildung in Aufwachsrichtung des Schaumes r(S) nicht oder nur unwesentlich von den ersten und zweiten Rohren 8, 9 behindert wird. Zu diesem Zweck sind die ersten und zweiten Rohre 8, 9 einerseits hinreichend voneinander beabstandet und andererseits jedoch so zahlreich, dass eine allumfassende und hinreichende thermische Behandlung des Schaumes S sichergestellt ist.

Eine Erwärmungs- und/oder eine Abkühlungs-Temperatur T1, T2 des Schaumes S **(Figuren 7** und **8)** werden/wird in Abhängigkeit von den Eigenschaften der Flüssigkeit P und des Schaumes S und den physikalischen Randbedingungen über die Steuereinrichtung 13 **(Figur 5)** mit Hilfe des Heizmittels $W_H$ mit der Heizmittel-Temperatur $T_H$ und des Kühlmittels $W_K$ mit der Kühlmittel-Temperatur $T_K$ eingestellt, sodass dadurch eine Steuerung der Schaumbildung möglich ist.

Der Schaum S wächst im Flüssigkeits-Behälter 100 näherungsweise mit einer Flüssigkeits-Temperatur T3 aus der freien Oberfläche N auf und befindet sich zunächst im Bereich des Heizabstandes h. Ein sich an der Heizfläche $O_H$ auf Erwärmungs-Temperatur T1 erwärmter Schaum $S_H$ befindet sich im Bereich des Kühlabstandes k, und ein sich abkühlender und abgekühlter Schaum $S_K$, letzterer mit der Abkühlungs-Temperatur T2, der im Zuge der Abkühlung zu Flüssigkeit zerfällt, befindet sich im Bereich oberhalb des Kühlabstandes k **(Figuren 7, 8** und **1, 4).**

Im Schaum-Behälter 200 wird ein Schaum S bevorratet, dessen Temperatur jener entsprechen wird, die im Bereich der Zuführung des Schaumes S in den Schaum-Behälter 200 vorliegt und die demzufolge etwas unterhalb der Flüssigkeits-Temperatur T3 liegen wird. Wenn der Schaum S bis an das Schaumhöhensoll N* heranwächst, von wo an das Heizregister 20.1 in Aufwachsrichtung des Schaumes r(S) seinen Anfang nimmt, wird er an der Heizfläche $O_H$ bis auf die Erwärmungs-Temperatur T1 erwärmt. Er befindet sich dann im Bereich des Kühlabstandes k und erfährt eine weitere Behandlung, wie vorstehend bereits beschrieben **(Figuren 7, 8** und **2).**

Das Registersystem 20 stützt sich vorzugsweise an dem Flüssigkeits- oder dem Schaum-Behälter 100, 200 über mehrere Träger 7 ab, die über den Umfang des jeweiligen Behälters 100, 200 vorzugsweise gleichverteilt angeordnet sind und sich vorzugsweise sternförmig zum Zentrum des jeweiligen Behälters 100, 200 hin erstrecken **(Figuren 5** bis **8).** Es sind vorzugsweise vier Trägern 7 vorgesehen **(Figuren 6, 5),** wobei diese Anzahl auch um ein bis zwei nach beiden Seiten variieren kann. In einer generalisierten und nicht dargestellten Ausführungsform des Registersystems 20 ergibt sich der Verlauf jedes Trägers 7 in Bezug zum Heizregister 20.1 vorzugsweise aus einer unteren Kontur des Heizregisters 20.1, an die sich jeder Träger 7 von unten anschmiegt.

In der vorstehend beschriebenen konkreten Ausgestaltung des Registersystems 20 in Form eines Monorohres zumindest für das Heizregister 20.1 ergibt sich der Verlauf jedes Trägers 7, wie in den **Figuren 5** bis **8** dargestellt, in Bezug zum Heizregister 20.1 aus der Positionierung der ersten Rohre 8, an die sich jeder Träger 7 von unten tangential anschmiegt. Durch die Berührungspunkte zwischen den ersten Rohren 8 und dem jeweils tangential an diesen anliegenden Träger 7 ergibt sich auf jedem Träger 7 eine gedachte Berührungslinie PL. Im Verlauf der Berührungslinie PL sind Halterungsmittel 12 für die ersten und die zweiten Rohre 8, 9 an dem Träger 7 vorgesehen, die mit dem Träger 7 fest verbunden sind. Die Halterungsmittel 12 sind vorzugsweise blechförmig ausgebildet und hochkant einerseits in Richtung einer Längsachse des jeweiligen Behälters 100, 200 und andererseits in Richtung der Berührungslinie PL ausgerichtet. Zwei benachbarte Halterungsmittel 12 fixieren jeweils ein erstes Rohr 8 in Richtung der Berührungslinie PL unverschieblich, und jedes Halterungsmittel 12 fixiert mindestens ein zweites Rohr 9 in Richtung der Berührungslinie PL ebenfalls unverschieblich.

In der beispielhaft dargestellten Ausführungsform besteht das Registersystem 20 aus dem ersten und dem zweiten Rohr 8, 9, das jeweils als Monorohr ausgebildet und vorzugsweise spiralförmig gewickelt ist. Das erste Rohr 8 liegt auf den Trägern 7 auf und ist zwischen zwei Halterungsmittels 12 lagefixiert. Es fungiert als Heizrohr und weist, gemessen von der freien Oberfläche N, den Heizabstand h auf **(Figuren 7, 8)** .Im Schaum-Behälter 200 ist das Heizregister 20.2 in einer durch das Schaumhöhensoll N* bestimmten Höhe positioniert. Das Heizregister 20.2 definiert somit in der Aufwachsrichtung des Schaumes r(S) den Eintritt des Schaumes S in eine Erwärmungs- bzw. Heizzone. Im Bereich oberhalb des Kühlabstandes k sind, bezogen auf den Zwischenabstand zwischen zwei benachbarten ersten Rohren 8, zwei unmittelbar benachbarte zweite Rohre 9 angeordnet. Die zweiten Rohre 9 stützen sich in Ausnehmungen der Halterungsmittel 12 derart ab, dass sowohl der Abstand untereinander als auch in Bezug zu den ersten Rohren 8, auch mit Blick auf die Sicherstellung des Kühlabstandes k, gegeben ist.

Lediglich die Träger 7 und die so schmal wie festigkeitsmäßig möglich ausgestalteten Halterungsmittel 12 liegen in der Aufwachsrichtung des Schaumes r(S), ohne diesen nennenswert thermisch zu behandeln. Sie tragen, bezogen auf die Aufwachsrichtung des Schaumes r(S), in entsprechend projizierter Richtung, eher zu einer mechanischen Beeinträchtigung des Schaumes S und damit zur gewünschten Schaumzerstörung bei.

Darüber hinaus zeigten das erfindungsgemäße Verfahren und die Vorrichtung zu seiner Durchführung ein weiteres positives Ergebnis. Dies besteht darin, dass die hochwirksame Schaumzerstörung am Ort der Schaumgenerierung im Flüssigkeits-Behälter 100 oder im Schaum-Behälter 200 zu einer Rückbildung in reine Flüssigkeit führt. Die im Schaum S enthaltenen und ggf. leicht flüchtigen und damit den Kopfraum der Behälter 100, 200 unter der forcierenden Einwirkung einer ggf. vorhandenen Vakuumquelle bereitwillig verlassenden Aromen bleiben in der rückgebildeten Flüssigkeit und werden auf kurzem Wege entweder direkt über die freie Oberfläche N oder von dem Schaumbehälter 200 in die Flüssigkeitsvorlage zurückgeführt.

BEZUGSZEICHENLISTE DER VERWENDETEN ABKÜRZUNGEN

| | |
|---|---|
| 100 | Flüssigkeits-Behälter |
| 200 | Schaum-Behälter |

| | |
|---|---|
| 2 | Behälter |
| 2a | oberer Boden |
| 2b | unterer Boden |
| 2c | Behältermantel |
| 2d | Ablaufstutzen |

| | |
|---|---|
| 3 | Verteilerschirm |
| 7 | Träger |
| 8 | erstes Rohr (Heizrohr) |
| 9 | zweites Rohr (Kühlrohr) |
| 12 | Halterungsmittel |
| 13 | Steuereinrichtung |
| 14 | Messeinrichtung |
| 15 | erstes Ventil |
| 16 | zweites Ventil |

| | |
|---|---|
| 20 | Registersystem |
| 20.1 | Heizregister |
| 20.2 | Kühlregister |

| | |
|---|---|
| A(P) | Austritt der Flüssigkeit |
| A(P') | Austritt der behandelten Flüssigkeit |

| | |
|---|---|
| $D_H$ | erster Durchmesser (erstes Rohr; Heizrohr) |
| $D_K$ | zweiter Durchmesser (zweites Rohr; Kühlrohr) |

| | |
|---|---|
| E(P) | Eintritt der Flüssigkeit |
| E(S) | Eintritt des Schaumes |

| | |
|---|---|
| F | Flüssigkeitsfilm |
| HL | Heizleistung |
| KL | Kühlleistung |

| | |
|---|---|
| $L_H$ | erste Länge (erstes Rohr; Heizrohr) |
| $L_K$ | zweite Länge (zweites Rohr; Kühlrohr) |

| | |
|---|---|
| LS | Schaumsignal |

N    freie Oberfläche (freies Niveau)
N*    Schaumhöhensoll

$O_H$    Heizfläche (erstes Rohr; Heizrohr)
$O_K$    Kühlfläche (zweites Rohr; Kühlrohr)

P    Flüssigkeit
P'    behandelte Flüssigkeit
PL    Berührungslinie

S    Schaum
$S_H$    sich erwärmender und erwärmter Schaum
$S_K$    sich abkühlender und abgekühlter Schaum

T1    Erwärmungs-Temperatur (des Schaumes S)
T2    Abkühlungs-Temperatur (des Schaumes S)
T3    Flüssigkeits-Temperatur (der Flüssigkeit P, P')
$T_H$    Heizmittel-Temperatur
$T_K$    Kühlmittel-Temperatur

$W_H$    Heizmittel
$W_K$    Kühlmittel

h    Heizabstand (erstes Rohr; Heizrohr)
k    Kühlabstand (zweites Rohr, Kühlrohr)
r(S)    Aufwachsrichtung des Schaumes

**Patentansprüche**

1.    Verfahren zur Steuerung der Schaumbildung in einem Flüssigkeits-Behälter (100),

• wobei eine Flüssigkeit (P) dem Flüssigkeits-Behälter (100) zugeführt wird, dort behandelt wird und verweilt und als behandelte Flüssigkeit (P') unterhalb einer von der Flüssigkeit (P) in dem Flüssigkeits-Behälter (100) gebildeten freien Oberfläche (N) aus dem Flüssigkeits-Behälter (100) abgeführt wird,
• wobei ein sich aus der Flüssigkeit (P) mit einer Flüssigkeits-Temperatur (T3) bildender Schaum (S) oberhalb der freien Oberfläche (N) freigesetzt wird und aufwächst,
• wobei der aufwachsende Schaum (S), beginnend in einem Heizabstand (h) von der freien Oberfläche (N), zunächst eine Erwärmung von der Flüssigkeits-Temperatur (T3) auf eine Erwärmungs-Temperatur (T1) in einem aus einem Heiz- (20.1) und einem Kühlregister (20.2) bestehenden Registersystem (20) erfährt,
• wobei der weiter aufwachsende erwärmte Schaum (S) anschließend, beginnend in einem Kühlabstand (k) vom Heizabstand (h), eine Abkühlung auf eine Abkühlungs-Temperatur (T2) in dem Registersystem (20) erfährt,
• wobei Mittel zur Durchführung des Wärmeaustauschs zur Erwärmung und Abkühlung des Schaumes (S) in einer Aufwachsrichtung des Schaumes (r(S)) strömungsdurchlässig sind,
• wobei die Erwärmungs- und/oder die Abkühlungs-Temperatur (T1, T2) in Abhängigkeit von den Eigenschaften der Flüssigkeit (P) und/oder der behandelten Flüssigkeit (P') und/oder von den physikalischen Randbedingungen eingestellt werden/wird, und
• wobei unter den Eigenschaften der Flüssigkeit (P; P') der Volumenstrom, die Viskosität, der Druck, die Temperatur und/oder die Zusammensetzung der Flüssigkeit (P) im Bereich der Zuführung in den oder im Bereich der Abführung aus dem Flüssigkeits-Behälter (100) und unter den physikalischen Randbedingungen der Druck und/oder das Ergebnis der Schaumzerstörung in dem Flüssigkeits-Behälter (100) verstanden werden/wird.

2.    Verfahren zur Steuerung der Schaumbildung in einem Schaum-Behälter (200),

• wobei der Schaum (S) dem Schaum-Behälter (200) mit einer Temperatur, die im Bereich der Zuführung in den Schaum-Behälter (200) vorliegt, zugeführt wird, dort aufwächst und als aus dem Schaum (S) entstandene Flüssigkeit (P) aus dem Schaum-Behälter (200) abgeführt wird,
• wobei der aufwachsende Schaum (S), beginnend an einem auf den Schaum-Behälter (200) bezogenen, vorgegebenen Schaumhöhensoll (N*), zunächst eine Erwärmung von der Temperatur, die im Bereich der Zuführung in den Schaum-Behälter (200) vorliegt, auf eine Erwärmungs-Temperatur (T1) in einem aus einem Heiz- (20.1) und einem Kühlregister (20.2) bestehenden Registersystem (20) erfährt,

• wobei der weiter aufwachsende erwärmte Schaum (S) anschließend, beginnend in einem Kühlabstand (k) vom Schaumhöhensoll (N*), eine Abkühlung auf eine Abkühlungs-Temperatur (T2) in dem Registersystem (20) erfährt,

• wobei Mittel zur Durchführung des Wärmeaustauschs zur Erwärmung und Abkühlung des Schaumes (S) in einer Aufwachsrichtung des Schaumes (r(S)) strömungsdurchlässig sind,

• wobei die Erwärmungs- und/oder die Abkühlungs-Temperatur (T1, T2) in Abhängigkeit von den Eigenschaften des Schaums (S) und/oder den physikalischen Randbedingungen eingestellt werden/wird, und

• wobei unter den Eigenschaften des Schaumes (S) der Volumenstrom, die Viskosität, der Druck, die Temperatur und/oder die Zusammensetzung des Schaumes (S) im Bereich der Zuführung in den Schaum-Behälter (200) und unter den physikalischen Randbedingungen der Druck und/oder das Ergebnis der Schaumzerstörung in dem Schaum-Behälter (200) verstanden werden/wird.

3. Verfahren nach Anspruch 1 oder 2,
**dadurch gekennzeichnet,**
**dass** ein Erstreckungsbereich des erwärmten Schaumes (S) und ein Erstreckungsbereich des abgekühlten Schaumes (S), in einer zugeordneten Aufwachsrichtung des Schaumes (r(S)) gesehen, unmittelbar aneinandergereiht sind, ohne sich gegenseitig vollständig oder wenigstens partiell zu überlappen.

4. Verfahren nach einem der vorhergehenden Ansprüche,
**dadurch gekennzeichnet,**
**dass** die Erwärmung und die Abkühlung des Schaumes (S) durch indirekten Wärmeaustausch erfolgt.

5. Verfahren nach einem der Ansprüche 1 bis 3,
**dadurch gekennzeichnet,**
**dass** die Erwärmung und/oder die Abkühlung des Schaumes (S) durch direkten Wärmeaustausch auf der Basis des Peltier-Effektes erfolgt.

6. Verfahren nach Anspruch 4,
**dadurch gekennzeichnet,**
**dass** als Wärmeträgermedium für den indirekten Wärmeaustausch ein Heizmittel ($W_H$) und ein Kühlmittel ($W_K$) vorgesehen ist.

7. Verfahren nach einem der Ansprüche 1 bis 6,
**dadurch gekennzeichnet,**
**dass** eine Kühlleistung im Bereich der Abkühlung des Schaumes (S) größer als eine Heizleistung im Bereich der Erwärmung des Schaumes (S) ausgelegt ist.

8. Verfahren nach einem der Ansprüche 1 bis 7,
**dadurch gekennzeichnet,**
**dass** die Erwärmungs- und/oder die Abkühlungs-Temperatur (T1, T2) mittels einer vor oder im Zuge der Inbetriebnahme des Flüssigkeits-Behälters (100) und des Schaum-Behälters (200)) erstellten und hinterlegten Einstellfunktion eingestellt werden/wird.

9. Flüssigkeits-Behälter für Flüssigkeiten (P) mit einer Vorrichtung zur Steuerung der Schaumbildung in dem Flüssigkeits-Behälter (100), geeignet zur Durchführung des Verfahrens nach Anspruch 1, mit dem Flüssigkeits-Behälter (100), der einen Eintritt (E(P)) für die Flüssigkeit (P) aufweist, mit einem Austritt (A(P')) für eine behandelte Flüssigkeit (P') und mit einer von der Flüssigkeit (P) in dem Flüssigkeits-Behälter (200) gebildeten freien Oberfläche (N),
**dadurch gekennzeichnet,**

• **dass** ein aus einem Heiz- (20.1) und einem Kühlregister (20.2) bestehendes Registersystem (20) vorgesehen ist, das mit dem Heizregister (20.1) von der freien Oberfläche (N) mit einem Heizabstand (h) beabstandet ist,

• **dass** das Kühlregister (20.2), in einer Aufwachsrichtung des Schaumes (r(S)) gesehen, gegenüber dem Heizregister (20.1) um einen Kühlabstand (k) versetzt angeordnet ist,

• **dass** dem Registersystem (20) eine Steuereinrichtung (13) zugeordnet ist, die eine Heizleistung (HL) des Heizregisters (20.1) und/oder eine Kühlleistung (KL) des Kühlregisters (20.2) in Abhängigkeit von den Eigenschaften der Flüssigkeit (P, P') und/oder den physikalischen Randbedingungen verändert, und
• **dass** die Steuereinrichtung (13) mit einer Messeinrichtung (14) verbunden ist, die wenigstens eine der Eigenschaften der Flüssigkeit (P, P') und/oder die physikalischen Randbedingungen ermittelt.

10. Schaum-Behälter für Schäume (S) mit einer Vorrichtung zur Steuerung der Schaumbildung in dem Schaum-Behälter (200), geeignet zur Durchführung des Verfahrens nach Anspruch 2, mit dem Schaum-Behälter (200), der einen Eintritt (E(S)) für den Schaum (S) und einen Austritt (A(P)) für eine aus dem Schaum (S) entstandene Flüssigkeit (P) aufweist,
**dadurch gekennzeichnet,**

• **dass** ein aus einem Heiz- (20.1) und einem Kühlregister (20.2) bestehendes Registersystem (20) vorgesehen ist, das mit dem Heizregister (20.1) in einer durch ein Schaumhöhensoll (N*) bestimmten Höhe im Schaum-Behälter (200) positioniert ist,
• **dass** das Kühlregister (20.2), in einer Aufwachsrichtung des Schaumes (r(S)) gesehen, gegenüber dem Heizregister (20.1) um einen Kühlabstand (k) versetzt angeordnet ist,
• **dass** dem Registersystem (20) eine Steuereinrichtung (13) zugeordnet ist, die eine Heizleistung (HL) des Heizregisters (20.1) und/oder eine Kühlleistung (KL) des Kühlregisters (20.2) in Abhängigkeit von den Eigenschaften des Schaumes (S) und/oder den physikalischen Randbedingungen verändert, und
• **dass** die Steuereinrichtung (13) mit einer Messeinrichtung (14) verbunden ist, die wenigstens eine der Eigenschaften des Schaumes (S) und/oder die physikalischen Randbedingungen ermittelt.

11. Flüssigkeits-Behälter (100) nach Anspruch 9 oder Schaum-Behälter (200) nach Anspruch 10,
**dadurch gekennzeichnet,**
**dass** das Heizregister (20.1) von einem Heizmittel ($W_H$) und das Kühlregister (20.2) von einem Kühlmittel ($W_K$) durchströmt werden.

12. Flüssigkeits-Behälter (100) nach Anspruch 9 oder Schaum-Behälter (200) nach Anspruch 10,
**dadurch gekennzeichnet,**
**dass** das Heizregister (20.1) und/oder das Kühlregister (20.2) jeweils als Peltier-Element ausgebildet sind/ist.

13. Registersystem für die Vorrichtung zur Steuerung der Schaumbildung des Flüssigkeits-Behälters (100) nach Anspruch 9, das aus einem Heiz- (20.1) und einem Kühlregister (20.2) nach Anspruch 9, 11 oder 12 besteht.

14. Registersystem für die Vorrichtung zur Steuerung der Schaumbildung des Schaum-behälters (200) nach Anspruch 10, das aus einem Heiz- (20.1) und einem Kühlregister (20.2) nach Anspruch 10, 11 oder 12 besteht.

15. Registersystem nach Anspruch 13 oder 14,
**dadurch gekennzeichnet,**
**dass** eine gesamte Kühlfläche ($O_K$) des Kühlregisters (20.2) größer als eine gesamte Heizfläche ($O_H$) des Heizregisters (20.1) ausgelegt ist.

16. Registersystem nach Anspruch 13,
**dadurch gekennzeichnet,**

• **dass** das Heizregister (20.1) aus ersten Rohren (8) und das Kühlregister (20.2) aus zweiten Rohren (9) besteht,
• **dass** die ersten Rohre (8) und die zweiten Rohre (9), jeweils für sich, reihenförmig nebeneinander und voneinander beabstandet angeordnet sind,
• **dass** die ersten Rohre (8) von der freien Oberfläche (N) mit dem Heizabstand (h) oder auf der durch das Schaumhöhensoll (N*) bestimmten Höhe positioniert sind,
• **dass** die zweiten Rohre (9) mit dem Kühlabstand (k) von dem Heizabstand (h) oder mit dem Kühlabstand (k) von der durch das Schaumhöhensoll (N*) bestimmten Höhe positioniert sind,
• und **dass** zweite Rohre (9) über den und verteilt auf die jeweiligen Lücken zwischen den ersten Rohren (8) angeordnet sind.

17. Registersystem nach Anspruch 16,
**dadurch gekennzeichnet,**
**dass** die ersten Rohre (8) und/oder die zweiten Rohre (9) jeweils als Monorohr ausgebildet sind.

**18.** Registersystem nach Anspruch 17,
**dadurch gekennzeichnet,**
**dass** das erste Rohr (8) und das zweite Rohr (9), jeweils ausgebildet als Monorohr, spiralförmig gewickelt ausgeführt sind.

**19.** Registersystem nach einem der Ansprüche 16 bis 18,
**dadurch gekennzeichnet,**
**dass** jeweils zwei zweite Rohre (9) über der jeweiligen Lücke zwischen zwei benachbarten ersten Rohren (8) symmetrisch und gleichverteilt positioniert sind.

**Claims**

**1.** A method for controlling the formation of foam in a liquid container (100),

• wherein a liquid (P) is fed to the liquid container (100), is treated and remains there and is carried away out of the liquid container (100) as a treated liquid (P') below a free surface (N) formed by the liquid (P) in the liquid container (100),
• wherein a foam (S) forming out of the liquid (P) at a liquid temperature (T3) is released above the free surface (N) and grows,
• wherein the growing foam (S), starting at a heating distance (h) from the free surface (N), firstly experiences heating of the liquid temperature (T3) to a heating temperature (T1) in a register system (20) consisting of a heating (20.1) and a cooling register (20.2),
• wherein the heated foam (S) that grows further then, starting at a cooling distance (k) from the heating distance (h), experiences cooling to a cooling temperature (T2) in the register system (20),
• wherein means for carrying out the heat exchange for heating and cooling the foam (S) are permeable to the flow in a direction of growth of the foam (r(S)),
• wherein the heating and/or cooling temperature (T1, T2) is/are adjusted depending on the properties of the liquid (P) and/or treated liquid (P') and/or on the physical constraints, and
• wherein the properties of the liquid (P; P') are understood to be the volumetric flow rate, viscosity, pressure, temperature and/or composition of the liquid (P) in the region in which said liquid is fed into or in the region in which said liquid is carried away out of the liquid container (100), and the physical constraints are understood to be the pressure and/or the result of the defoaming in the liquid container (100).

**2.** A method for controlling the formation of foam in a foam container (200),

• wherein the foam (S) is fed to the foam container (200) at a temperature that prevails in the region in which said foam is fed into the foam container (200), grows there and is carried away out of the foam container (200) as a liquid (P) produced from the foam (S),
• wherein the growing foam (S), starting at a predetermined foam height target (N*) that relates to the foam container (200), firstly experiences heating of the temperature that prevails in the region in which said foam is fed into the foam container (200) to a heating temperature (T1) in a first register system (20) consisting of a heating (20.1) and a cooling register (20.2),
• wherein the heated foam (S) that grows further then, starting at a cooling distance (k) from the foam height target (N*), experiences cooling to a cooling temperature (T2) in the register system (20),
• wherein means for carrying out the heat exchange for heating and cooling the foam (S) are permeable to the flow in a direction of growth of the foam (r(S)),
• wherein the heating and/or cooling temperature (T1, T2) is/are adjusted depending on the properties of the foam (S) and/or the physical constraints, and
• wherein the properties of the foam (S) are understood to be the volumetric flow rate, viscosity, pressure, temperature and/or composition of the foam (S) in the region in which said foam is fed into the foam container (200), and the physical constraints are understood to be the pressure and/or the result of the defoaming in the foam container (200).

**3.** The method according to claim 1 or 2,
**characterized**
**in that** an extension region of the heated foam (S) and an extension region of the cooled foam (S), viewed in an associated direction of growth of the foam (r(S)), immediately adjoin one another without overlapping with one another fully or at least in part.

4. The method according to any one of the preceding claims,
**characterized**
**in that** the heating and cooling of the foam (S) takes place by means of indirect heat exchange.

5. The method according to any one of claims 1 to 3,
**characterized**
**in that** the heating and/or cooling of the foam (S) takes place by means of direct heat exchange on the basis of the Peltier effect.

6. The method according to claim 4,
**characterized**
**in that** a heating means ($W_H$) and a cooling means ($W_K$) is provided as the heat transfer medium for the indirect heat exchange.

7. The method according to any one of claims 1 to 6,
**characterized**
**in that** a cooling capacity in the region in which the foam (S) is cooled is designed to be greater than a heating capacity in the region in which the foam (S) is heated.

8. The method according to any one of claims 1 to 7,
**characterized**
**in that** the heating and/or cooling temperature (T1, T2) is/are adjusted by means of an adjustment function created and stored prior to or during commissioning of the liquid container (100) and foam container (200).

9. A liquid container for liquids (P), comprising a device for controlling the formation of foam in the liquid container (100), suitable for carrying out the method according to claim 1, comprising the liquid container (100), which has an inlet (E(P)) for the liquid, comprising an outlet (A(P')) for a treated liquid (P') and comprising a free surface (N) formed by the liquid (P) in the liquid container (200),
**characterized**

• **in that** a register system (20) consisting of a heating (20.1) and a cooling register (20.2) is provided, the heating register (20.1) of which register system is spaced apart from the free surface (N) at a heating distance (h),
• **in that** the cooling register (20.2), viewed in a direction of growth of the foam (r(S)), is arranged so as to be offset with respect to the heating register (20.1) by a cooling distance (k),
• **in that** the register system (20) is assigned a control apparatus (13) that alters a heating capacity (HL) of the heating register (20.1) and/or a cooling capacity (KL) of the cooling register (20.2) depending on the properties of the liquid (P, P') and/or the physical constraints, and
• **in that** the control apparatus (13) is connected to a measuring apparatus (14) that determines at least one of the properties of the liquid (P, P') and/or the physical constraints.

10. A foam container for foams (S), comprising a device for controlling the formation of foam in the foam container (200), suitable for carrying out the method according to claim 2, comprising the foam container (200), which comprises an inlet (E(S)) for the foam (S) and an outlet (A(P)) for a liquid (P) produced from the foam (S),
**characterized**

• **in that** a register system (20) consisting of a heating (20.1) and a cooling register (20.2) is provided, the heating register (20.1) of which register system is positioned at a height in the foam container (200) determined by means of a foam height target (N*),
• **in that** the cooling register (20.2), viewed in a direction of growth of the foam (r(S)), is arranged so as to be offset with respect to the heating register (20.1) by a cooling distance (k),
• **in that** the register system (20) is assigned a control apparatus (13) that alters a heating capacity (HL) of the heating register (20.1) and/or a cooling capacity (KL) of the cooling register (20.2) depending on the properties of the foam (S) and/or the physical constraints, and
• **in that** the control apparatus (13) is connected to a measuring apparatus (14) that determines at least one of the properties of the foam (S) and/or the physical constraints.

**11.** The liquid container (100) according to claim 9 or the foam container (200) according to claim 10, **characterized** in that a heating means ($W_H$) flows through the heating register (20.1) and a cooling means ($W_K$) flows through the cooling register (20.2).

**12.** The liquid container (100) according to claim 9 or the foam container (200) according to claim 10, **characterized** in that the heating register (20.1) and/or the cooling register (20.2) is/are each designed as a Peltier element.

**13.** A register system for the device for controlling the formation of foam in the liquid container (100) according to claim 9, which consists of a heating (20.1) and a cooling register (20.2) according to claim 9, 11 or 12.

**14.** A register system for the device for controlling the formation of foam in the foam container (200) according to claim 10, which consists of a heating (20.1) and a cooling register (20.2) according to claim 10, 11 or 12.

**15.** The register system according to claim 13 or 14, **characterized** in that a total cooling surface ($O_K$) of the cooling register (20.2) is designed to be larger than a total heating surface ($O_H$) of the heating register (20.1).

**16.** The register system according to claim 13, **characterized**

- **in that** the heating register (20.1) consists of first pipes (8) and the cooling register (20.2) consists of second pipes (9),
- **in that** the first pipes (8) and the second pipes (9), both taken separately, are arranged in rows one next to the other and at a distance from one another,
- **in that** the first pipes (8) are positioned at the heating distance (h) from the free surface (N) or at the height determined by means of the foam height target (N*),
- **in that** the second pipes (9) are positioned at the cooling distance (k) from the heating distance (h) or at the cooling distance (k) from the height determined by means of the foam height target (N*),
- and **in that** second pipes (9) are arranged over the first pipes (8) and so as to be allocated to the respective gaps between said first pipes.

**17.** The register system according to claim 16, **characterized** in that the first pipes (8) and/or the second pipes (9) are each designed as a mono-pipe.

**18.** The register system according to claim 17, **characterized** in that the first pipe (8) and the second pipe (9), each designed as a mono-pipe, are wound in the manner of a spiral.

**19.** The register system according to any one of claims 16 to 18, **characterized** in that, in each case, two second pipes (9) are positioned over the relevant gap between two adjacent first pipes (8) in a symmetrical and uniformly distributed manner.

**Revendications**

**1.** Procédé de commande pour la formation de mousse dans un réservoir de liquide (100),

- dans lequel un liquide (P) est alimenté vers le réservoir de liquide (100), où il est traité et séjourne et à partir d'où il est évacué hors du réservoir de liquide (100) en tant que liquide traité (P') sous une surface supérieure libre (N) formée par le liquide (P) dans le réservoir de liquide (100),
- dans lequel une mousse (S) formée à partir du liquide (P) à une température de liquide (T3) est libérée et se développe au-dessus de la surface supérieure libre (N),
- dans lequel la mousse (S) se développant connaît tout d'abord une augmentation de la température de liquide (T3) à une température de chauffage (T1) dans un système de registres (20) comprenant un registre de chauffage (20.1) et un registre de refroidissement (20.2), à partir d'une distance de chauffage (h) par rapport à la surface supérieure libre (N),

• dans lequel la mousse chauffée (S) se développant encore davantage connaît ensuite un refroidissement à une température de refroidissement (T2) dans le système de registres (20), à partir d'une distance de refroidissement (k) par rapport à la distance de chauffage (h),

• dans lequel des moyens d'exécution de l'échange de chaleur aux fins du chauffage et du refroidissement de la mousse (S) dans une direction de développement de la mousse (r(S)) sont perméables à l'écoulement,

• dans lequel la température de chauffage et/ou de refroidissement (T1, T2) est/sont réglée(s) en fonction des propriétés du liquide (P) et/ou du liquide traité (P') et/ou en fonction des conditions marginales physiques, et

• dans lequel, par propriétés du liquide (P ; P'), on entend le flux volumique, la viscosité, la pression, la température et/ou la composition du liquide (P) dans la région de l'alimentation vers le réservoir de liquide (100) ou dans la région de l'évacuation hors de celui-ci, et, par conditions marginales physiques, on entend la pression et/ou le résultat de la décomposition de mousse dans le réservoir de liquide (100).

2. Procédé de commande pour la formation de mousse dans un réservoir de mousse (200),

• dans lequel la mousse (S) est alimentée vers le réservoir de mousse (200) à une température présente dans la région de l'alimentation vers le réservoir de mousse (200), où elle se développe, et évacuée hors du réservoir de mousse (200) en tant que liquide (P) formé à partir de la mousse (S),

• dans lequel la mousse en développement (S) connaît tout d'abord une augmentation de la température présente dans la région de l'alimentation vers le réservoir de mousse (200), à une température de chauffage (T1), dans un système de registres (20) comprenant un registre de chauffage (20.1) et un registre de refroidissement (20.2), à partir d'un niveau de mousse de consigne prédéfini (N*) se rapportant au réservoir de mousse (200),

• dans lequel la mousse chauffée (S) se développant encore davantage connaît ensuite un refroidissement à une température de refroidissement (T2) dans le système de registres (20), à partir d'une distance de refroidissement (k) par rapport au niveau de mousse de consigne (N*),

• dans lequel des moyens d'exécution pour l'échange de chaleur aux fins du chauffage et du refroidissement de la mousse (S) dans une direction de développement de la mousse (r(S)) sont perméables à l'écoulement,

• dans lequel la température de chauffage et/ou de refroidissement (T1, T2) est/sont réglée(s) en fonction des propriétés de la mousse (S) et/ou des conditions marginales physiques, et

• dans lequel, par propriétés de la mousse (S), on entend le flux volumique, la viscosité, la pression, la température et/ou la composition de la mousse (S) dans la région d'alimentation vers le réservoir de mousse (200) et, par conditions marginales physiques, on entend la pression et/ou le résultat de la décomposition de mousse dans le réservoir de mousse (200).

3. Procédé selon la revendication 1 ou 2,
**caractérisé en ce que**

- une région d'extension de la mousse chauffée (S) et une région d'extension de la mousse refroidie (S) sont juxtaposées directement, sans se chevaucher complètement, ni même partiellement entre elles, vues dans une direction de développement correspondante de la mousse (r(S)).

4. Procédé selon l'une des revendications précédentes,
**caractérisé en ce que**

- le chauffage et le refroidissement de la mousse (S) se font par échange de chaleur indirect.

5. Procédé selon l'une des revendications 1 à 3,
**caractérisé en ce que**

- le chauffage et/ou le refroidissement de la mousse (S) se font par échange de chaleur direct sur la base de l'effet Peltier.

6. Procédé selon la revendication 4,
**caractérisé en ce que**

- un fluide de chauffage ($W_H$) et un fluide de refroidissement ($W_K$) sont prévus en tant que fluide caloporteur servant à l'échange de chaleur indirect.

**7.** Procédé selon l'une des revendications 1 à 6,
**caractérisé en ce que**

- une puissance de refroidissement dans la région du refroidissement de la mousse (S) est supérieure à une puissance de chauffage dans la région du chauffage de la mousse (S).

**8.** Procédé selon l'une des revendications 1 à 7,
**caractérisé en ce que**

- la température de chauffage et/ou de refroidissement (T1, T2) est/sont réglée(s) au moyen d'une fonction de réglage établie et enregistrée avant ou pendant la mise en marche du réservoir de liquide (100) et du réservoir de mousse (200).

**9.** Réservoir de liquide pour liquides (P) avec un dispositif de commande pour la formation de mousse dans le réservoir de liquide (100), adapté pour l'exécution du procédé selon la revendication 1, avec le réservoir de liquide (100) présentant une entrée (E(P)) pour le liquide (P), avec une sortie (A(P')) pour un liquide traité (P') et avec une surface supérieure libre (N) formée par le liquide (P) dans le réservoir de liquide (200),
**caractérisé en ce que**

• il est prévu un système de registres (20) comprenant un registre de chauffage (20.1) et un registre de refroidissement (20.2), dont le registre de chauffage (20.1) est éloigné de la surface supérieure libre (N) selon une distance de chauffage (h),
• le registre de refroidissement (20.2) est disposé de façon décalée par rapport au registre de chauffage (20.1) selon une distance de refroidissement (k), vu dans une direction de développement de la mousse (r(S)),
• un dispositif de commande (13) modifiant une puissance de chauffage (HL) du registre de chauffage (20.1) et/ou une puissance de refroidissement (KL) du registre de refroidissement (20.2) en fonction des propriétés du liquide (P, P') et/ou des conditions marginales physiques est attribué au système de registres (20), et
• le dispositif de commande (13) est relié à un dispositif de mesure (14) déterminant l'une au moins des propriétés du liquide (P, P') et/ou des conditions marginales physiques.

**10.** Réservoir de mousse pour mousses (S) avec un dispositif de commande pour la formation de mousse dans le réservoir de mousse (200), adapté pour l'exécution du procédé selon la revendication 2, avec le réservoir de mousse (200) présentant une entrée (E(S)) pour la mousse (S) et une sortie (A(P)) pour un liquide (P) formé à partir de la mousse (S),
**caractérisé en ce que**

• il est prévu un système de registres (20) comprenant un registre de chauffage (20.1) et un registre de refroidissement (20.2), dont le registre de chauffage (20.1) est positionné à une hauteur déterminée par un niveau de mousse de consigne (N*) dans le réservoir de mousse (200),
• le registre de refroidissement (20.2) est disposé de façon décalée par rapport au registre de chauffage (20.1) selon une distance de refroidissement (k), vu dans une direction de développement de la mousse (r(S)),
• un dispositif de commande (13) modifiant une puissance de chauffage (HL) du registre de chauffage (20.1) et/ou une puissance de refroidissement (KL) du registre de refroidissement (20.2) en fonction des propriétés de la mousse (S) et/ou des conditions marginales physiques est attribué au système de registres (20), et
• le dispositif de commande (13) est relié à un dispositif de mesure (14) déterminant l'une au moins des propriétés de la mousse (S) et/ou des conditions marginales physiques.

**11.** Réservoir de liquide (100) selon la revendication 9 ou réservoir de mousse (200) selon la revendication 10,
**caractérisé en ce que**

- le registre de chauffage (20.1) est traversé par un flux de fluide de chauffage ($W_H$) et le registre de refroidissement (20.2) est traversé par un flux de fluide de refroidissement ($W_K$).

**12.** Réservoir de liquide (100) selon la revendication 9 ou réservoir de mousse (200) selon la revendication 10,
**caractérisé en ce que**

- le registre de chauffage (20.1) et/ou le registre de refroidissement (20.2) est/sont formé(s) respectivement comme un élément de Peltier.

13. Système de registres pour le dispositif de commande pour la formation de mousse du réservoir de liquide (100) selon la revendication 9, comprenant un registre de chauffage (20.1) et un registre de refroidissement (20.2) selon la revendication 9, 11 ou 12.

14. Système de registres pour le dispositif de commande pour la formation de mousse du réservoir de mousse (200) selon la revendication 10, comprenant un registre de chauffage (20.1) et un registre de refroidissement (20.2) selon la revendication 10, 11 ou 12.

15. Système de registres selon la revendication 13 ou 14,
**caractérisé en ce que**

- une surface de refroidissement complète ($O_K$) du registre de refroidissement (20.2) est supérieure à une surface de chauffage complète ($O_H$) du registre de chauffage (20.1).

16. Système de registres selon la revendication 13,
**caractérisé en ce que**

• le registre de chauffage (20.1) comprend des premiers tuyaux (8) et le registre de refroidissement (20.2) comprend des deuxièmes tuyaux (9),
• les premiers tuyaux (8) et les deuxièmes tuyaux (9), respectivement, sont disposés les uns à côté des autres en rangée et à distance les uns des autres,
• les premiers tuyaux (8) sont positionnés selon la distance de chauffage (h) par rapport à la surface supérieure libre (N) ou à la hauteur déterminée par le niveau de mousse de consigne (N*),
• les deuxièmes tuyaux (9) sont positionnés selon la distance de refroidissement (k) par rapport à la distance de chauffage (h) ou selon la distance de refroidissement (k) par rapport à la hauteur déterminée par le niveau de mousse de consigne (N*),
• et des deuxièmes tuyaux (9) sont disposés par-dessus les premiers tuyaux (8) tout en étant répartis entre les interstices respectifs entre les premiers tuyaux (8).

17. Système de registres selon la revendication 16,
**caractérisé en ce que**

- les premiers tuyaux (8) et/ou les deuxièmes tuyaux (9) sont respectivement conçus comme un monotube.

18. Système de registres selon la revendication 17,
**caractérisé en ce que**

- le premier tuyau (8) et le deuxième tuyau (9), respectivement conçus comme un monotube, sont réalisés de façon enroulée en forme de spirale.

19. Système de registres selon l'une des revendications 16 à 18,
**caractérisé en ce que**

- deux deuxièmes tuyaux (9) sont respectivement positionnés symétriquement et répartis de façon homogène au-dessus de l'interstice respectif entre deux premiers tuyaux (8) voisins.

**Figur 1**

**Figur 2**

**20**

**100**       **200**

**2a**

E(S)

20.2

k

20.1

N*

S

S

E(P)

P        N

A(P)

E(P)        ▽
                 N

P        2

2c

E(P)        P

P

A(P')

P'

E(P)        A(P')        2b

P'

**Fig. 3**

**A-A**

**Fig. 4**

**Figur 5**

**Figur 6**

**Figur 9**

**B**

**Fig. 7**

**C**

**Figur 8**

**EP 3 370 511 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1866046 B1
- DE 29722673 U1
- DE 3803572 A1
- DE 2163666 A1
- DE 3727132 A1
- DE 4304808 A1
- DE 1017140 A1
- DE 102004062804 B3
- GB 726804 A